# EUROPEAN PATENT SPECIFICATION

(11) **EP 2 600 051 B1**
(45) Date of publication and mention of the grant of the patent: **13.02.2019**
(21) Application number: 11811874.4
(22) Date of filing: 15.07.2011
(51) Int. Cl.: F16L 55/18, F16L 55/175, F16L 1/26, F16L 55/168, B29C 63/06

(54) **APPARATUS AND METHOD FOR STRUCTURAL REPAIR OF PIPES SUBMERGED IN A FLUID**
VORRICHTUNG UND VERFAHREN ZUR STRUKTURELLEN REPARATUR VON IN EINER FLÜSSIGKEIT EINGETAUCHTEN ROHREN
APPAREIL ET PROCÉDÉ POUR LA RÉPARATION STRUCTURELLE DE CANALISATIONS IMMERGÉES DANS UN FLUIDE

(30) Priority: 02.03.2011 ES 201130276; 26.07.2010 ES 201031150
(43) Date of publication of application: 05.06.2013
(73) Proprietor: De La Torre Ugarte Del Castillo, Luis Fidel, 39004 Santander (ES)
(72) Inventor: De La Torre Ugarte Del Castillo, Luis Fidel, 39004 Santander (ES)
(74) Representative: Dehns
(86) International application number: PCT/ES2011/070523
(87) International publication number: WO 2012/013847

(56) References cited:
- WO-A1-2005/114036
- WO-A1-2009/157748
- GB-A- 2 402 989
- US-A- 1 940 729
- US-A- 2 899 983
- US-A- 4 007 705
- US-A- 5 199 226
- US-A- 5 238 331
- US-A1- 2004 129 373

## Description

### OBJECT OF THE INVENTION

The invention aims to provide an apparatus and method that allow the repair of pipes that are immersed in a fluid, for example for repairing leaks, areas damaged by corrosion, etc.

Another object of the invention is to enable pipes structural reinforcement, when required, for example when they are damaged. It is also an object of the invention providing the apparatus with means for sliding on the pipe that allow to move the apparatus along the pipe to the area to be repaired. During the sliding it also allows overcoming the flanges or obstacles, included in the pipe.

Furthermore, the invention allows carrying out the inspection of the pipe by sliding the apparatus on it, until detecting an area where the pipe is damaged, allowing then carrying out the repair of the damaged area.

The invention allows carrying out the repair of the pipe by way of a painting, and/or by applying a repair sheet around the pipe.

The invention allows the cleaning of the pipe prior to repair. Hence allowing inspection, cleaning and/or repairing the pipe are objects of the invention.

The invention is applicable to any type of submarine pipe, such as, for example horizontal, vertical and elbow pipes, so that in the case of being applied to the vertical pipes, it allows placing the apparatus on the pipe on an area out of the water, and sliding the apparatus along the pipe by a lifting device until detecting a damaged area, which allows carrying out its subsequent cleaning and/or repair. In the case of being applied to a horizontal pipe the sliding can be done manually or by a robot or any other device that allows moving the apparatus on the pipe.

### BACKGROUND OF THE INVENTION

In the state of the art structural repair of pipes is known by applying sheets of carbon fiber, glass or others, which are chemically pretreated or not with the purpose of forming a composite or laminate around the pipe.

This application is done manually on the surface.

In addition, in the state of the art performing structural repairs of submarine pipes is known by manufacturing two pieces of steel that define a liner to be welded to the pipe for embracing it, and thus ensure the fastening and containment. Also in this repair a type of resin that fills the cavity between the liners and the pipe is usually injected. Thus the leak or possible defect in the pipe is perfectly sealed.

This structural solution requires the use of welding tools that contaminate the fluid and that present significant safety risks, in addition to the possibility of causing cracks and other damage to the pipes during the welding stage.

In addition the delivery times of the two pieces of the liner are dilated, since they are large and very heavy parts, which have to be manufactured with great precision. After manufacturing the liner, these must be transported to the place where the repair to be carried out, what delays the repair of the pipe.

On the other hand, the fact that welds have to be made, forces a team of divers to stay for long hours of underwater activity. In many other cases there is the situation that the liners do not fit the measures of the pipe, which requires the return thereof and manufacturing some new liners to fit the pipe to be repaired.

The indicated delays in repairing the pipe, can mean dangerous problems of production, safety and possible contamination, in the case of leaks.

Other disadvantages of steel liners is that they are extremely heavy, which means increasing the loads on the pipe, which is why finite element analysis studies are necessary in most cases. This greatly limits the number of liners that can be installed in a pipe segment.

In the state of the art, patent documents US2004129373 and GB 240989 can also be cited, which describe a procedure to repair pipes under the water by applying a strip of a helically wound sealing composite material to cover the damaged parts. On the band a liner made of two semi-cylindrical halves is overlapped. Said semi-cylindrical halves are coupled by fastenings with nuts and bolts, or by welding to the damaged area and create a sealed chamber around the strip, wherein a mortar is injected, remaining all the set over the repaired pipe. This procedure has the disadvantage that the liner is left permanently on the pipe and is part of the repair, for this reason it cannot be reused for other repairs, which considerably increases the cost of the repairs.

Patent application WO2009157748 can also be cited, which describes a method and apparatus that carries out the helical application of a strip on a not submerged pipe. It allows the creation of an open space between the pipe and the applied material, which is filled with a resin that in addition to sealing provides integrity to the damaged pipe. This device, unlike the invention does not allow to create a sealed chamber from which water is dried and inside of which a device for applying a sealant strip operates.

Patent application WO 2005114036 describes a repairing assembly and method for reinforcing and repairing a section of a subsea pipeline, the assembly comprising a sleeve to be placed around the pipeline section and a resin to be injected in an annular chamber defined between the sleeve and the pipeline section. The sleeve has two ports for removing water from the chamber, for drying the chamber and for injecting the resin into the chamber, with the ports being closed after the injecting operation. The sleeve remains permanently on the pipeline after the repair is completed.

### DESCRIPTION OF THE INVENTION

To achieve the goals and solve the drawbacks listed above, at least the preferred embodiments of the invention provide a new apparatus and method for repair of submarine pipes.

The present invention provides an apparatus for structural repair of pipes immersed in a fluid, at least comprising: one housing with tubular configuration that is equipped with two portions joined together and attached to a pipe by means of end flanges including an inner edge that fits the configuration of said pipe by a leak-tight joint, being the contour housing that surrounds the pipe, establishing a sealed chamber between the housing and the pipe, means for draining water from the sealed chamber, actuatable after forming the sealed chamber, and pipe repair means provided in the sealed chamber actuatable after draining the water from the sealed chamber, the pipe repair means being arranged to carry out repair of the pipe by way of painting and/or by applying a repair sheet around the pipe, wherein the portions of the housing are configured to be separable after the pipe is repaired by the repair means to allow repeating of the repair process by the repair means in a new damaged area.

This configuration allows to drain the water remaining in the sealed chamber after mounting the housing on the pipe, allowing for the subsequent repair of the pipe according to the means provided by the apparatus of the invention, and which will be described later.

In one embodiment of the invention the apparatus further comprises at least one extensible element attached to the two portions of the housing, so that said extensible element allows to carry out the separation/approximation of the two portions. In addition, the apparatus comprises first means for guiding the housing over the pipe, which in turn comprise at least two complementary collar segments, each hingedly attached to at least one of the ends of one of the portions of the housing. The guiding means also comprise means of attachment between the collar segments and first sliding elements over the pipe, which are located in the collar segments.

The at least extensible element is configured in such a way that when carrying out the separation of the portions, its location around the pipe is allowed and when bringing them close they couple on the pipe forming the sealed chamber. Furthermore, said collar segments are configured so that once the housing portions apart are arranged around the pipe, when fixing the collar segments together, the first sliding elements rest on the pipe allowing carrying out the guided sliding of the housing over said pipe to an area to be repaired.

In the preferred embodiment of the invention, the first sliding elements on the pipe comprise rollers that are assisted by a preload spring for pressing against the pipe. This configuration allows that, when performing the sliding of the apparatus on the pipe, the springs absorb the irregularities that said pipe may have.

Also in the preferred embodiment of the invention the collar segments are equipped with braking means of the housing on the pipe to prevent its displacement during a repair, what is especially useful when the apparatus of the invention is applied to vertical pipes, since in these ones, once the draining of water from inside the sealed chamber has been made, the housing tends to float and thus to move up along the pipe, what Is prevented by such braking means. Said braking means include wedges that are arranged on inclined guides provided on supports that are attached to the inside of the collar segments, so that said guides allow the simultaneous guided displacement of the wedges axially and radially with respect to the pipe. Moreover the supports are provided with guide pivots, wherein a ring segment is arranged for each segment of the collar, so that each ring segment is arranged perpendicularly to the inside of the collar. Said ring segments are attached to the wedges and to an inflatable piston while they are assisted by springs, so that this configuration allows that when inflating the inflatable piston the transverse displacement of the ring segments on the collar segments overcoming the spring action is produced, what simultaneously causes radial and longitudinal movement of the wedges to the outside of the pipe separating from it, and so that when deflating the piston, the opposite movement is produced, pushing the wedges on the pipe surface, anchoring the apparatus in position on the pipe in which the piston has been deflated.

To facilitate the separation/approximation of the portions of the housing, it is expected that the two portions are interconnected by guides of the separation/approximation displacement of said portions.

Said extensible element is constituted by a pneumatic cylinder, the ends of which are attached to each one of the portions so that the extension of the pneumatic cylinder causes the separation between portions of the housing, and its shortening causes the coupling of the two portions of housing on the pipe in the area to be repaired.

In one embodiment of the invention, it is considered that the pipe may include an obstacle that prevents the sliding of the housing over the pipe, such as a connection flange of the pipe. In this case the apparatus comprises an extensible cylinder the ends of which are hingedly attached to the articulated joint of the collar segments and to one of the ends of one of the portions of the housing to conduct the approximation/separation of said collar segments. Moreover one of said collar segments is provided at its ends with at least one bar that emerges tangentially from said ends and which is arranged on a sliding cap provided at the ends of the other the collar segment, to conduct the guided approximation/separation of the collar segments. The ends of the portions of the housing comprise second means for guiding the housing over the pipe. Said second means for guiding the housing comprise at least two circular sectors, arranged on a guide rail, assisted by a telescopic cylinder, and provided with second sliding elements on the pipe, the circular sectors being arranged between said end of each one of the portions of the housing and the collar segments and separated from said collar segments at least a distance corresponding to the width of a flange of the pipe or obstacle. The extensible cylinders and the telescopic cylinders are configured so that when carrying out the guided sliding of the housing on the pipe by the first sliding elements of the collar segments of the first guiding means, when said collar segments reach the obstacle, the collar segments are separated and then the second sliding elements lean on the pipe for guiding the housing over the pipe during the flange section or obstacle, and after the collar segments have passed the obstacle, the first sliding elements lean on the pipe and then the second sliding elements of the pipe are separated, to continue guiding the housing on the pipe through said first sliding elements.

In this embodiment the attachment means between the collar segments consist of a mechanical seal comprising a movable profile provided with an opening and assisted by a pneumatic cylinder, arranged at the ends of one of the collar segments, and the ends of the other collar segment comprise a sheet, and due to that the ends of the collar segments are approximated and acting the pneumatic cylinder, the sheet is placed in the opening of the movable profile, performing the closure.

To allow carrying out the inspection of the pipe, the apparatus includes sensors of detection of said state of the pipe, such as feelers, ultrasonic sensors and cameras for image capture, which can be located anywhere in the apparatus of the invention, for example, in the case of feelers and ultrasonic sensors, these can be provided on the collar segments, and in the case of the cameras for image capture, they can be arranged on the inside of the portions of the housing.

With respect to the means for repairing the pipe they comprise two rotating disks arranged parallel to the end flanges and that are associated with a ring gear the rotation of which causes the angular displacement of the rotating disks around the pipe, for which an engine engaging the ring gear to produce the angular displacement of the rotating disks around said pipe is envisaged.

In addition, the means for repairing the pipes are equipped with a roller the axis of which has a tubular configuration that communicates with holes provided on the surface of the roller, and all this so that said roller can rotate on its axis and being arranged on the rotating disks to allow placing the roller on the surface of the pipe by pressing on it; having at least one connection of the tubular axis of the roller with a deposit of a repair chemical product, such as a polymer, resin, etc.. so that when turning the roller over the surface of the pipe by action of the engine, the repair chemical product is applied on said surface of the pipe through the holes in the coil, providing a coating that determines the repair of the pipe. Obviously, the roller can take a variable number of turns depending on the repair to be performed to provide a coating of a certain thickness that allows the aforementioned repair.

In the preferred embodiment of the invention said roller is arranged on the rotating disks through a roller lifting/lowering mechanism. Said lifting/lowering mechanism comprises a rotating axis assisted by a spring and that is fixed to the rotating disks. Furthermore, two arms are integrally fixed to the rotation axis, and the roller axis is fixed to the ends of said arms. Moreover the rotating axis is integral to a lever actuated by a movable position cam by a piston on rotating disks, so that by positioning the cam in the path of the lever the angular displacement of the rotating axis is produced, overcoming the action of the spring, what causes the lifting of the roller. Upon lifting the roller, the interlocking of the rotating axis in this position is produced, by a pin that locks into said rotating axis that holds the roller in the lifted position until a wedge arranged on the rotating disks acts on the locking pin unlocking it and producing the lowering of the roller by spring action, placing the roller in the position where it contacts and presses against the pipe. The lifting of the roller prevents it from sticking to the surface of the pipe when the repair chemical product is dried.

With respect to the at least tubular axis connection of the roller with a repair chemical product deposit, it comprises a first and a second contiguous female coupling and assisted by a spring that are fixed in one of the rotating disks and that are connected through a conduit with the tubular axis of the roller. Said connection of the tubular axis of the roller with a repair chemical product deposit, also includes a first and a second male coupling, each arranged in a fixed position semicircular lane on the portions of the housing. These lanes are envisaged around the pipe and connected, each one of them, with a repair chemical product deposit. The male couplings are assisted by a strap that keeps them at the front end of the lane. Furthermore, said connecting means of the tubular axis of the roller with a repair chemical product deposit include two cams that are provided in correspondence with the beginning and end of each lane and located In the path of the female couplings to produce the movement of said female couplings overcoming the action of the spring when contacting the cams.

Based on the configuration described it is understood that by being the first female coupling coupled to the first male coupling, the rotation of the rotating disks produces the movement of the female couplings, the first female coupling dragging the first male coupling overcoming the action of the strip, so that when reaching the end of the lane, the initial cam of the other lane raises the second female coupling and produces its coupling on the second male coupling arranged at the beginning of the lane, and then the first jack connector contacts the cam provided at the end of the lane causing the lifting of the first female coupling overcoming the action of its spring and disconnecting it from the first male coupling, so that said first male coupling returns to its initial position by the action of the strip. The process is repeated with each half turn of the rotating disks.

In another embodiment of the invention, the means for repairing the pipe comprise a sealed box which is longitudinally arranged in one of the portions of the housing so that said sealed box is equipped with a trapdoor that leads to the sealed chamber, further comprising telescopic guides on which is arranged a coil in which a pipe repair sheet is rolled. The coil comprises two end pivots, so that the coil is arranged with an unrolled end section of the sheet and guided by guiding rollers that hold the unrolled section of the sheet in vertical position. In addition, the sealed box is equipped with a displacement piston of said telescopic guides to move them to a position where the coil is fixed on an arm provided on each one of the two rotating disks, for which said arms are provided with a recess for locating and fixing the pivots included in the roller.

Based on the description carried out, it is easily understood that when the piston is actuated the telescopic guides move opening the trapdoor and the coil pivots being housed on the recesses of the supports, so that the unrolled end of the sheet is located on the surface of the pipe. In addition the arms in which the coil is held, are located in correspondence with the roller, so that by positioning the end of the sheet of the coil on the surface of the pipe and when performing the rotation of the rotating disks, the roller is arranged on the end of the sheet, pressing it against the surface of the pipe, thus allowing to perform the rolling up of the sheet around the pipe when there is angular displacement of the rotating disks.

In another embodiment of the invention the repair means comprise the coil which is provided with an axis that has an element of traction to pull from its axis in the unrolling direction of the coil in its unrolling initial section, i.e. the element of traction, once it acts, carries out the unrolling of the unrolling initial section of the sheet of the coil.

In addition, the repair means include the two rotating disks, which are arranged parallel to the flanges, and that are provided with recesses at the ends of the axis of the coil, so that said rotating disks are also related to the ring gear so that when causing the rotation of the ring gear, the rotation thereof is made.

In this case, the repair means also comprise the roller that can rotate about its axis, and one of whose ends is supported on the lateral surface of the ring gear to locate the roller over the surface of the pipe pressing against it. The other end of the axis of the roller is arranged in one of the rotating disks. Also, the engine that engages the ring gear to produce rotation of the roller over the surface of the pipe, which when pressing on it, also produces the rotation about its axis.

Moreover, in this embodiment, the repair means include a sealed coil charger that is arranged longitudinally in one of the portions of the housing which includes means for sealed closure of introduction of the coils in the chamber. The charger is equipped with an element of retention of the coil in its rolled position, and blockage of the means of traction preventing the unrolling of the sheet by the action of the means of traction; moreover the charger being provided with expulsion means of the coil to the interior of the sealed chamber, so that during the expulsion of the coil to the sealed chamber, once this has been emptied is caused the unlocking of the coil in its rolled position, with the means of traction acting on the axis of the coil carrying out the unrolling of the initial unrolling section of the coil and simultaneously the axis of the coil is located and retained in the recesses of the rotating disks, so that the unrolling is carried out, to a point where the end of the sheet of the coil is placed over the pipe surface. The recesses of the rotating disks are located in correspondence with the roller, so that by positioning the end of the coil on the surface of the pipe, the roller passing over the end of the sheet of the coil and pressing it against the surface of the pipe is allowed leading to the unrolling of the coil and its adhesion to the surface of the pipe.

The roller is attached to the ring gear and the rotating disk by a support assisted by a spring that keeps the roller pressing against the surface of the pipe adjusting to different rolling heights of the sheet of the coil by the action of the spring.

With respect to the expulsion means of the coil, in one embodiment of the invention, these comprise a manual operation button that is attached to a plunger, so that when pressing the button, there is displacement of the plunger which on its movement pushes the coil and releases it from the retaining and locking element of the axis of the coil in its rolled position which is provided in the charger, so that the element of traction of the axis of the coil in the unrolling direction thereof, acts carrying out the unrolling of the rolling final section of the sheet, as it has been described.

In another embodiment of the invention the expulsion means of the cartridge are formed by an electromagnet that is attached to the plunger so that the electromagnet is actuated by a control module that is connected to a sensor that detects when the recesses of the disks are located at the vertical of the cartridge to be expelled, at which point the sensor indicates to the control module said situation which produces the activation of the electromagnet that moves the plunger and pushes the coil in an equivalent way as described in the previous case.

In either case, when the plunger pushes the coil, it pushes a hinged lid which forms the means for sealed closure of introduction of the coil, making the introduction into the sealed chamber while performing the unrolling of the coil as it was described.

For carrying out the introduction of the coil in the sealed chamber, the engine can be stopped by means of the control circuit when the sensor detects the correct position of the recesses of the disks for receiving the coil, and once detected the location of the coil in the recesses, the engine is activated again to continue with the repair process- In other cases, and intentionally, the disks will be allowed to continue rotating without carrying any coil housed to allow the roller to act without interference from the coil with the sheet, for example to continue to apply the repair chemical product on the sheet if so required.

The means for seated closure of introduction of the coils in the chamber are determined by a hinged lid, which is located in front of the coil that is located in correspondence with the plunger, so that when acting the expulsion means of the coil, it presses against the hinged lid, performing its opening and allowing the Introduction of the coil in the sealed chamber, so that its unrolling occurs simultaneously such as it was described.

The apparatus of the invention can also be equipped with means for cleaning the pipe, which selectively comprise air injection means, and a deposit of an abrasive product with a compressor connected to the nozzles provided on the portions of the housing and a combination of both, to selectively project the abrasive cleaning product, the air and a combination of both on the pipe. Thus, when the compressor is activated the abrasive cleaning product is projected on the pipe, thereby carrying out the cleaning of the pipe in the area to be repaired. Cleaning is complemented by the addition of suction means of the waste produced in the cleaning through nozzles provided in the portions of the housing.

With respect to the means for draining water from the sealed chamber, which were discussed above, in one embodiment of the invention it is envisaged that they are constituted by means for injecting air into the sealed chamber to produce the water drain through non-return valves provided in the housing portions. The air injection means comprise an air compressor that is selectively applied on nozzles arranged in the housing or on a conduit that is connected to the tubular axis of the coil, so that the air is applied to the interior of the sealed chamber through the holes provided in said coil, which were described above. It should be mentioned that the nozzles and compressors, can be shared, both by the means for draining water from the sealed chamber, and the cleaning means or the suction means. The nozzles can be fixed or adjustable in different directions through mechanisms of pistons attached to the housing to move the nozzles.

One embodiment of the invention comprises means for temperature control of the sealed chamber and the pipe segment, which is selected from an up/down temperature control that is carried out through resistances, to facilitate the chemical reaction and solidification of the applied repair chemical product, in the case where only the repair is carried out by repair chemical product, and also allows facilitating the chemical reaction and solidification of the sheet of the coil on the pipe, when a sheet is used in the repair, such as it was already described- In addition, the temperature control means of the sealed chamber and the pipe segment wherein the housing is installed can be an element of application of air produced by the draining means.

To facilitate coupling of the housing portions on the pipe, it is provided that said housing portions comprise some centering feet assisted by a spring, for when approximating the portions on the pipe, the centering feet lean on the pipe and perform the centering of said portions on it.

In the case where the pipes have damages of considerable thickness, which are located by the detection means described above, it is envisaged that the apparatus of the invention comprises a trigger element, by compressed air, of balls of a repair chemical product for filling cavities detected on the surface of the pipe, so that next carrying out the repair of the same as it has been described, is allowed.

As it has been discussed earlier, the invention is applicable to both horizontal and vertical submarine pipes, its application resulting more advantageous in vertical pipes, for which in this case the apparatus is equipped with means for fixing a lifting cable of the portions of the housing, to arrange them around a vertical pipe in or out of the water, so that once fixed the collar segments, the lifting means acting is allowed and sliding down the portions of the housing along the pipe, and inspecting it until detecting a damaged area, carrying out the repair as it has been previously mentioned.

The apparatus of the invention also comprises a depth sensor, to set the depth at which the different damaged areas in the pipeline are.

Furthermore, the invention relates to a method of pipe repair by means of the apparatus described, comprising mounting around a pipe a housing with tubular configuration provided with two portions with sealed closure, forming a sealed chamber between the housing and the pipe. Then the water inside the sealed chamber is drained and the pipe is repaired by repair means of the pipe provided in the housing. Finally the housing is removed for reuse.

Draining water from the inside of the sealed chamber is carried out through a stage selected from an air injection stage that moves the water outside the chamber through non-return valves and a stage of suction of the water from the inside of the sealed chamber.

In one embodiment of the invention, the stage of mounting around a pipe a housing with tubular configuration provided with two portions with sealed closure forming a sealed chamber between the housing and the pipe, comprises actuating the extensible element which is fixed to the portions that form the housing of the apparatus, to separate them and allow placing them around a vertical pipe in the area that is out of the water, what then allows joining the complementary collar segments around the pipe, where the collar segments articulate in at least one of the ends of the portions to locate the first sliding means provided in the collar segments pressing on the pipe, which allows sliding along the pipe the apparatus actuating the lifting device, and detecting the state of the pipe using the sensors provided in the apparatus, so that once a damaged area is detected, the sliding of the apparatus on the pipe is stopped, and the portions are coupled on the surface of the pipe in the area to be repaired by the action of the extensible element, forming the sealed chamber, so that next the position of the housing is blocked by the action of the braking means, and the water from inside the sealed chamber is drained, for then carrying out the cleaning of the pipe, if necessary, and its subsequent repair.

When carrying out the guided sliding of the housing on the pipe through the collar segments, of the first guiding means, when said collar segments reach an obstacle, comprises a stage in which some second sliding elements of some second guiding means of the housing lean on the pipe and then the collar segments are separated, during the flange or obstacle section, and once the flange or obstacle is overcame by the collar segments, the first sliding elements of the collar segments of the first guiding means lean on the pipe, and then the second sliding elements of the pipe are separated from the second guiding means, to continue guiding the housing on the pipe by said first sliding elements of the first guiding means; repeating the process for the other end of the portions of the housing.

In one embodiment of the invention, the stage of repair of the pipe comprises applying a repair chemical product to a tubular axis of the roller, arranged in the sealed chamber pressing on the surface of the pipe and applying the repair chemical product to the surface of the pipe through holes provided in the roller surface when performing its rotation around Its axis and the pipe to produce the coating on the surface of the pipe and its subsequent solidification.

In another embodiment of the invention, the repair of the pipe comprises introducing in a tight manner in the sealed chamber a coil wherein a sheet for pipe repair is rolled in a position parallel to the pipe with the end of the sheet unrolled in a section to be placed on the pipe. Next a roller provided in the sealed chamber is actuated to press on the pipe surface, performing its rotation around its axis and the pipe to hold the end of the sheet of the coil between the roller and the pipe and unrolling the sheet of the coil around the pipe by moving the roller over said pipe. The invention envisages then that a repair chemical product can be applied to the tubular axis of the roller, pressing on the surface of the sheet of the coil, and applying the repair chemical product to the sheet through the holes provided on the surface of the roller when performing its rotation around its axis and the pipe to produce the coating of the sheet with repair chemical product.

The process is repeated from the introduction into the sealed chamber of a new coil, a plurality of times necessary to repair the pipe.

It comprises a cleaning stage of the pipe, prior to the repair stage, by cleaning means provided in the apparatus, which perform a stage selected from a stage of application of an abrasive cleaning product on the surface of the pipe and a stage of air injection, then comprising a stage of suction of the waste resulting from the cleaning performed. After the repair stage, is carried out a temperature control stage of the sealed chamber and of the pipe segment with control, selected from an up temperature control and a down temperature control that is carried out by an element selected from heating resistances and an air application element to facilitate the chemical reaction of the repair chemical product and accelerate its solidification.

Once the repair of a damaged area is carried out, the separation of the portions of the housing is performed, to allow continuing inspecting the pipe and repeating the process in a new damaged area.

Therefore, by the apparatus and method of the invention is allowed the ) inspection, cleaning and repairing of a pipe automatically and without the use of divers for the case of vertical pipes.

Next, to facilitate a better understanding of this specification and forming an integral part of it, a series figures are attached in which with an illustrative and not limiting character the object of the invention has been represented.

### BRIEF DESCRIPTION OF THE FIGURES

Figure 1.- Shows a perspective view of a possible example of embodiment of the apparatus of the invention. One of the portions of one of the flanges has not been represented for facilitating viewing the inside of the sealed chamber. The housing has been represented in a transparent material to allow viewing its interior, but obviously it can be made up of any other material.
Figure 2.- Shows a view equivalent to the previous figure, wherein the rolling of the sheet of the coil around the pipe has started.
Figure 3.- Shows a side view of the device of the previous figures, wherein is shown the stage in which the coil makes contact with a stop by means of which its expulsion from the recesses provided in the rotating disks is carried out.
Figure 4 to 6.- Schematically show the process of expulsion of a coil of the charger, and its location on the recesses of the rotating disk for carrying out the rolling process of the sheet of the coil around the pipe.
Figure 7.- Shows a partial view of a section of the device in the area of the air conduit for emptying the chamber and the fluid that facilitates the adhesion and solidification of the sheet on the tube. This figure also shows the detail of the supports assisted by a spring regulating the height of the cylinder so that it is always kept pressing the different sheet layers that are rolled around the affected area of the pipe.
Figure 8.- Shows a schematic representation of the traction means of the axis of the coil to produce its initial unrolling.
Figures 9 to 24 show another example of embodiment of the invention, where:

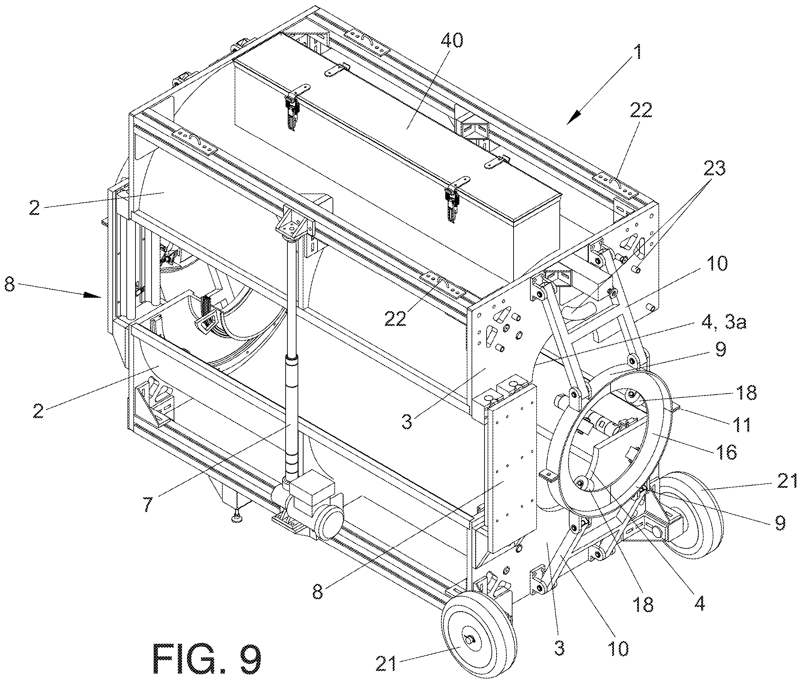

   Figure 9.- Shows a perspective view in which the two portions of the housing are connected by an extensible element 7 that allows performing the separation/approximation of said portions. In this figure, the portions are in a position where they are separated to allow its arrangement around a pipe.

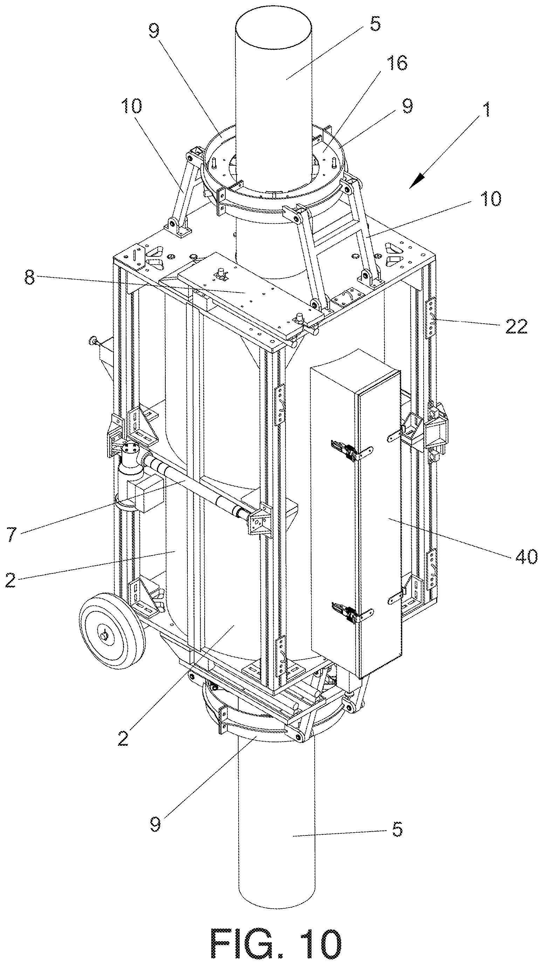

   Figure 10.- Shows a perspective view of the apparatus of the previous figure coupled on a pipe for carrying out its repair.

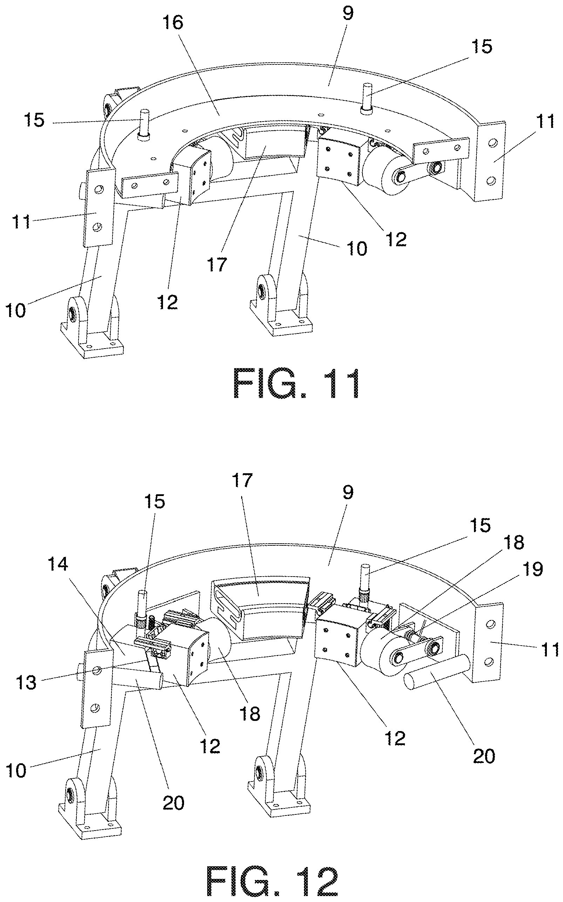

   Figures 11 and 12.- Show a collar segment wherein the sliding means of the apparatus on the pipe, the braking means of the apparatus on the pipe in the repair position, and the feelers for detecting the state of pipe are included.

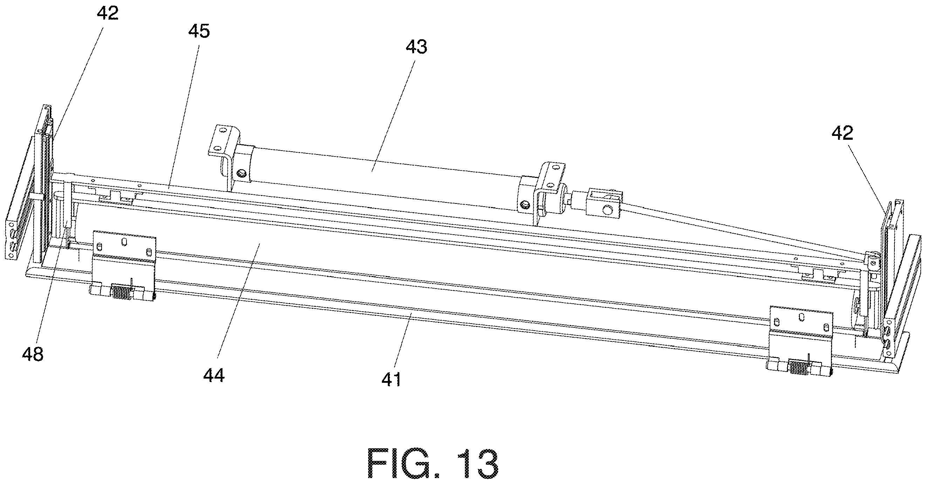

   Figure 13.- Shows a detail of the Interior of the sealed box in which a coil of a repair tape of the pipes is arranged, which by means of a piston is inserted into the interior of said sealed chamber.

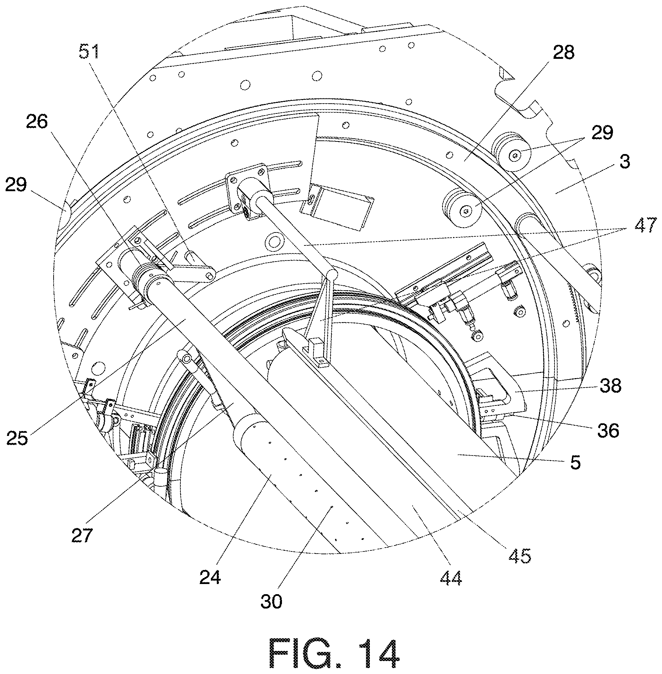

   Figure 14.- Shows a detail of the arrangement of the coil inside the sealed chamber over some arms provided on the rotating disks, the angular displacement of which carries out the rolling of the coil tape around the pipe.

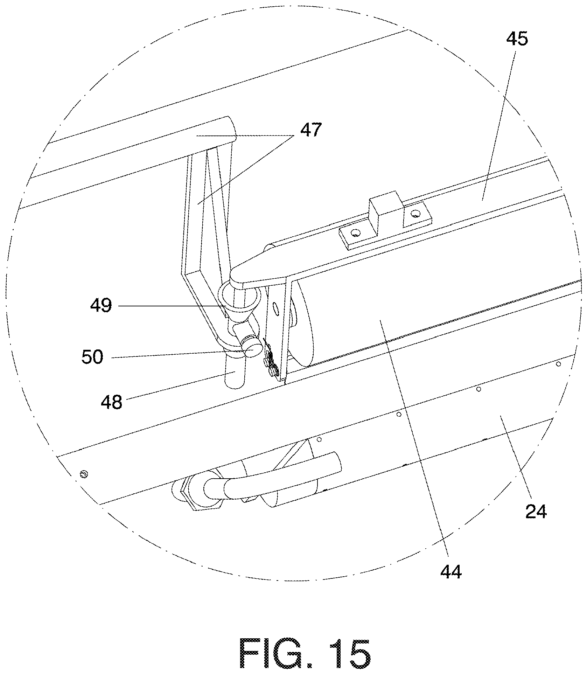

   Figure 15.- Shows a perspective view of the detail of the location of the coil inside the sealed chamber.

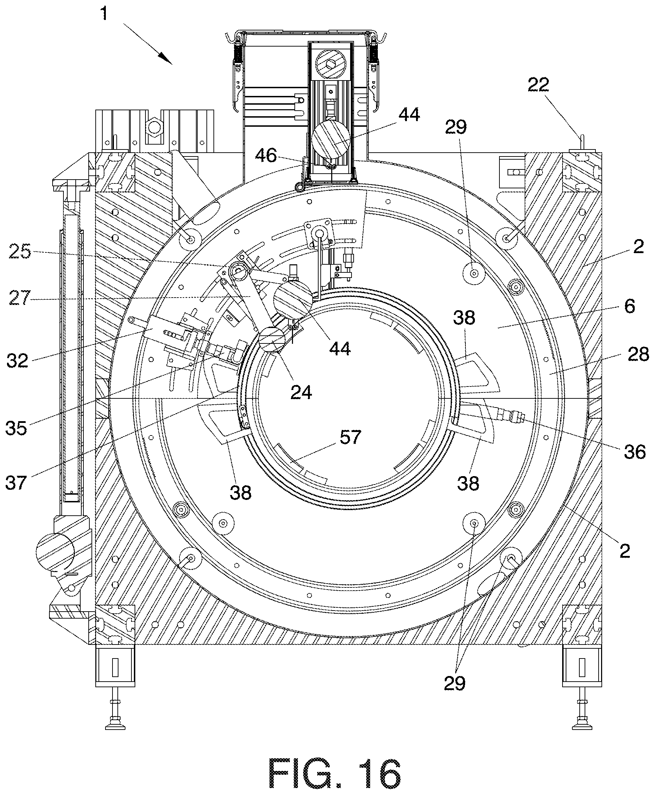

   Figure 16.- Shows a cross-sectional view of the apparatus of the invention.

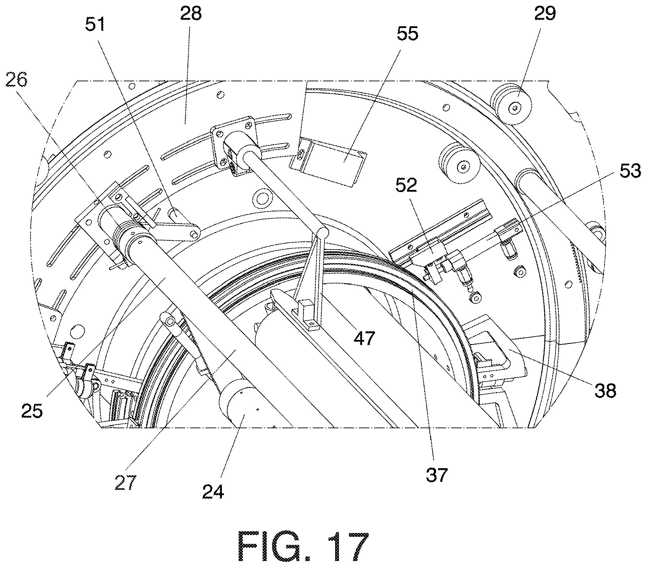

   Figure 17.- Shows a perspective view of the detail of the roller lifting/lowering mechanism which has a dual function: to be located on the surface of the pipe discoursing around the same and impregnating it with a resin, and simultaneously or additionally, pressing on the coil sheet for carrying out the rolling thereof on the pipe.

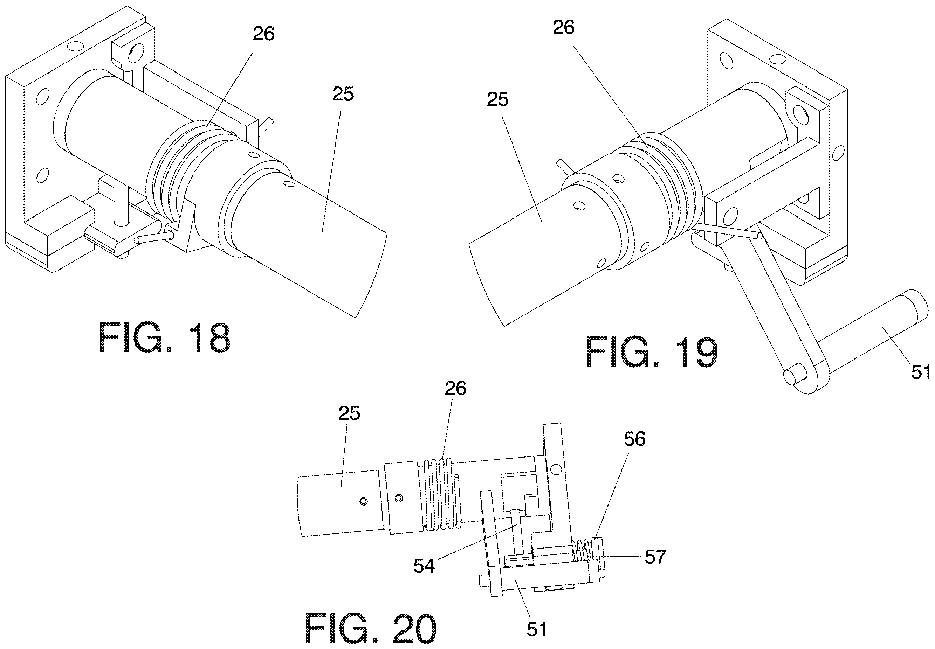

   Figures 18 to 20.- Show the detail of the operation of the roller lifting/lowering mechanism.

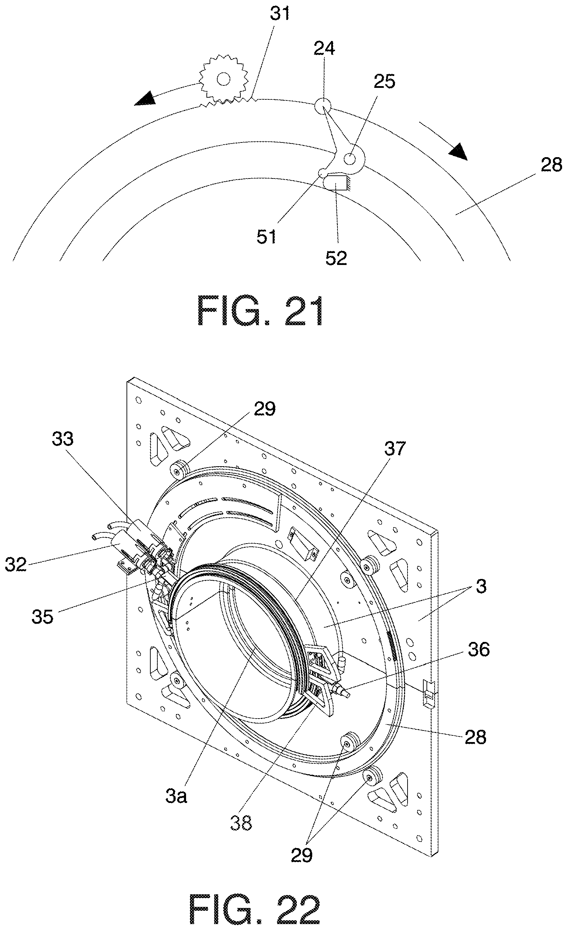

   Figure 21.- Shows a schematic view of the lifted position of the roller.
   Figure 22.- Shows a perspective view of the detail of the coupling of the tubular axis of the roller to a resin deposit for the application of said resin on the surface of the pipe.

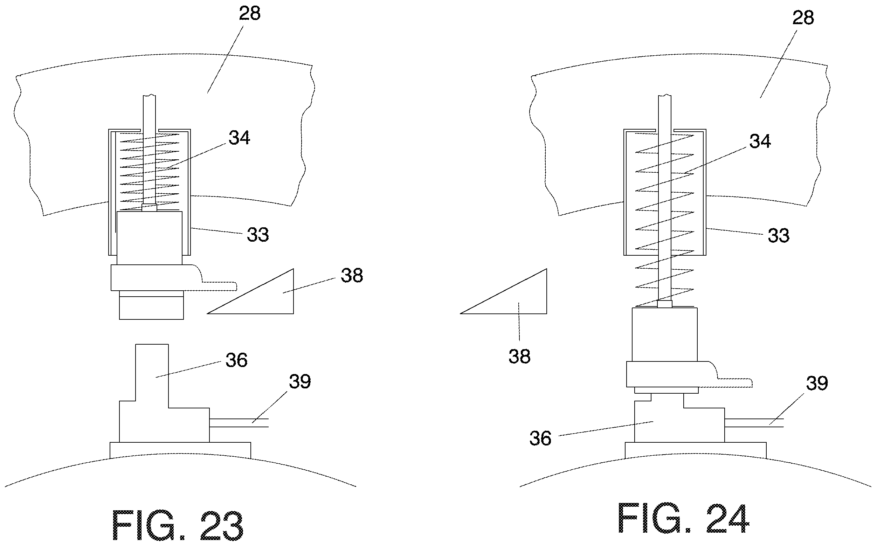

   Figures 23 and 24.- Show the detail of the decoupling/coupling of the female couplings on the male couplings for performing the connection of the tubular axis of the roller with the resin deposits.

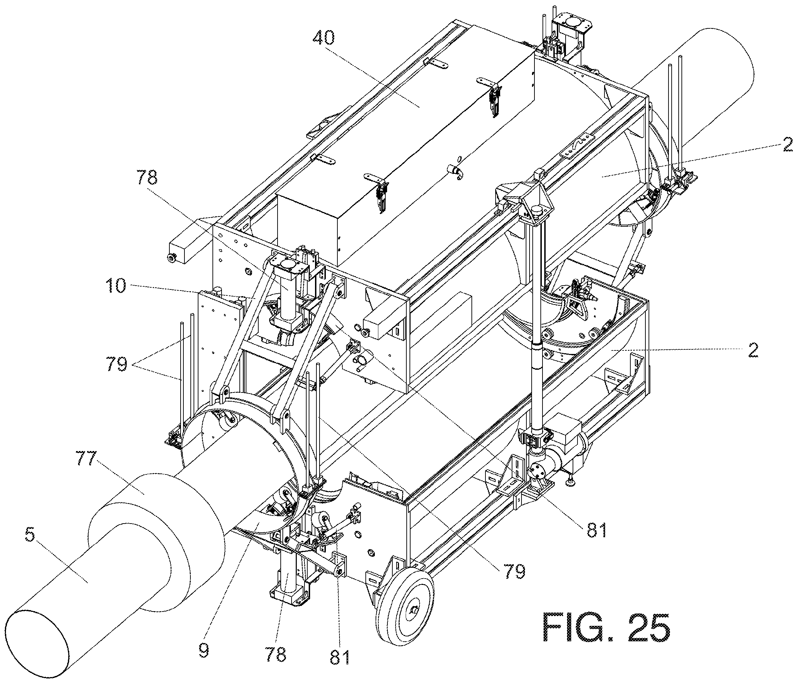

Figures 25 to 30 show another embodiment of the invention, where:
   Figure 25.- Shows a perspective view of another embodiment of the invention wherein second guiding means of the housing are used to allow overcoming obstacles that the pipe may include, as for example, may be the flanges conventionally incorporated in said pipes.

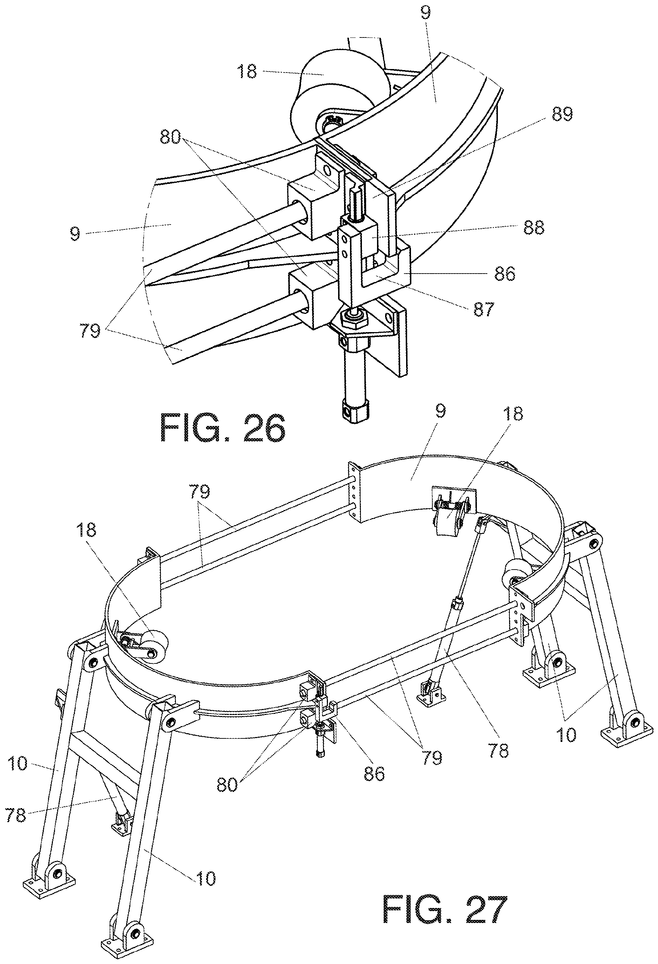

   Figure 26.- Shows a perspective view of the attachment means between collar segments.
   Figure 27.- Shows a perspective view of the detail of the elements that allow approximating/separating the collar segments by extendible cylinders in order to allow performing this movement automatically.

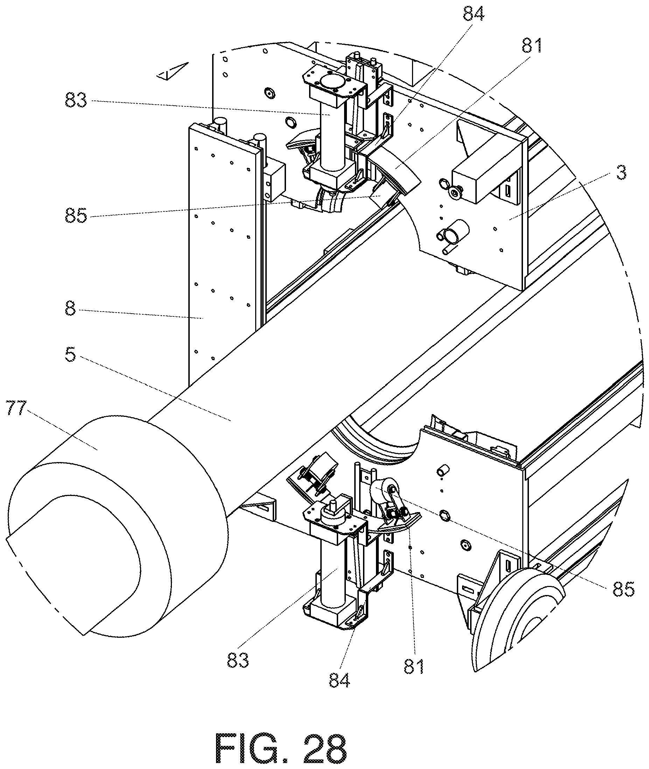

   Figure 28.- Shows a perspective view of the detail of the second guiding means in a position where they are far away from the pipe, depicted in Figure 25.

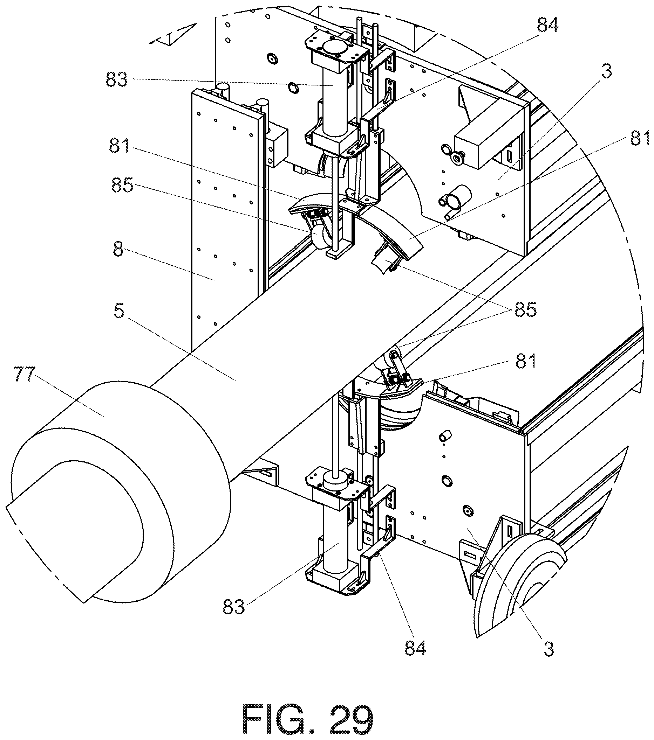

   Figure 29.- Shows a perspective view equivalent to the previous figure, but in this case the second guiding means are supported on the pipe.

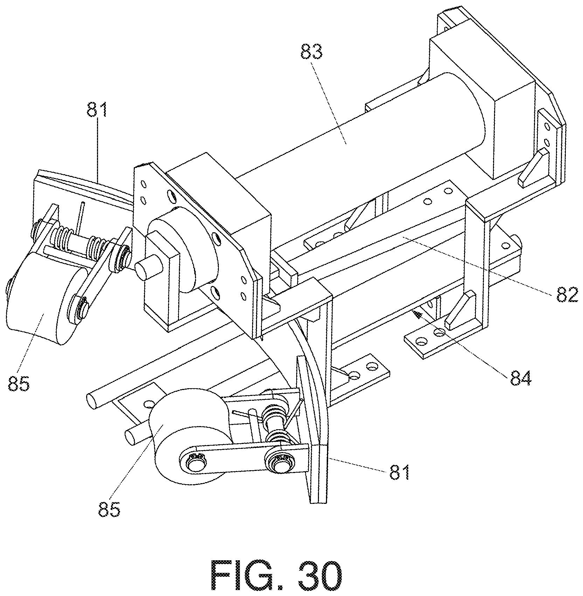

   Figure 30.- Shows a detailed view of the second guiding means.

### DESCRIPTION OF THE PREFERRED EMBODIMENT

The following is a description of the invention based on the above mentioned figures.

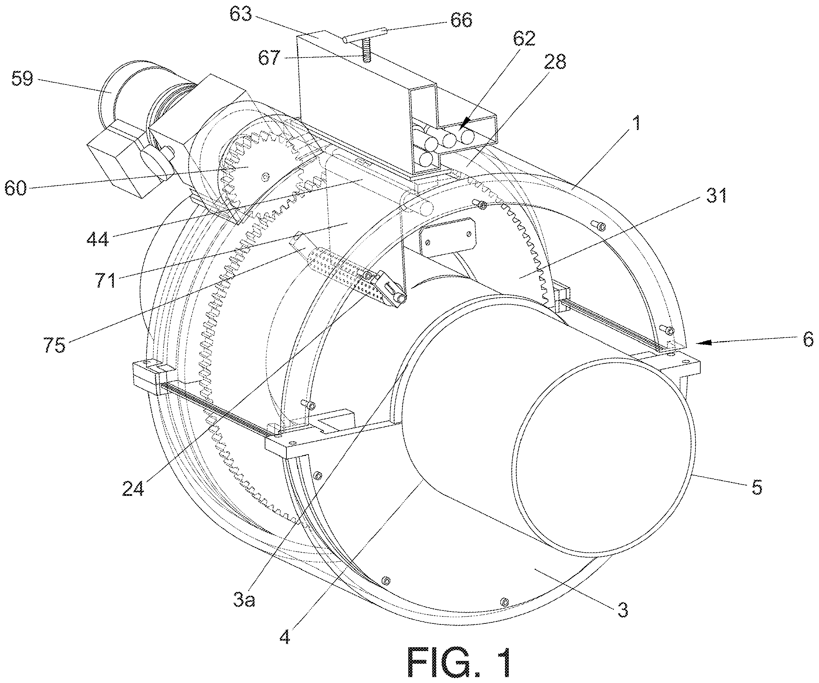

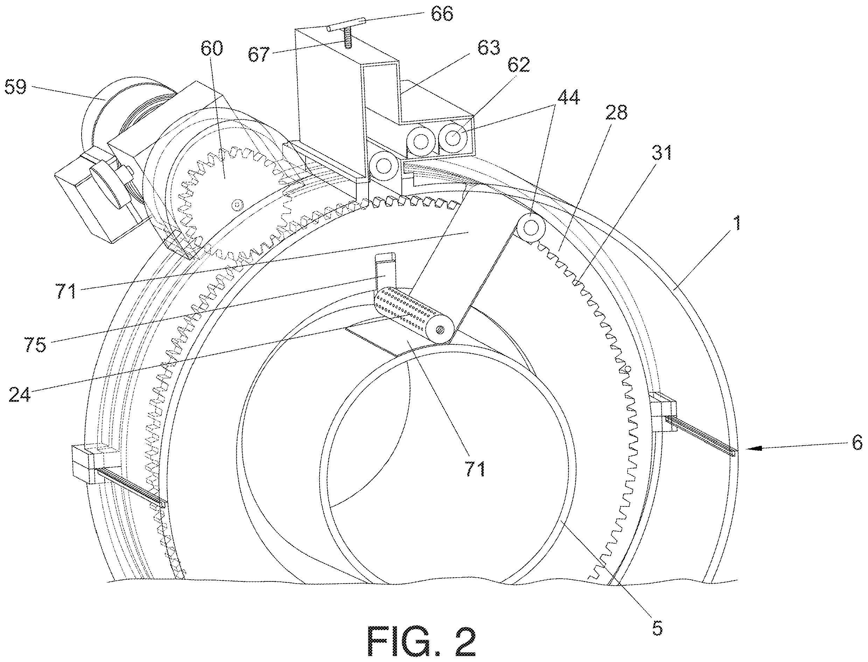

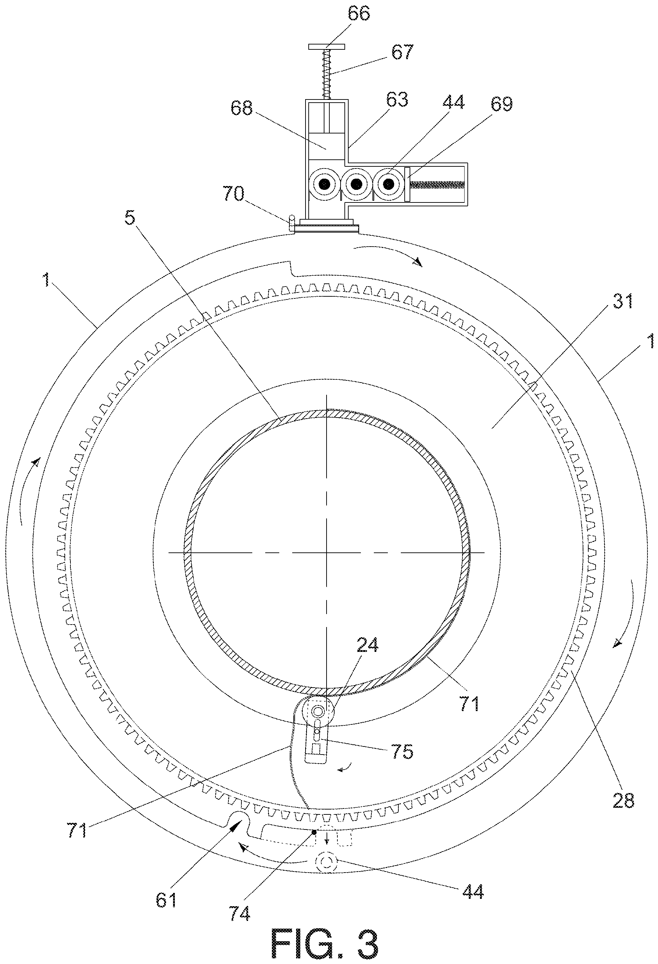

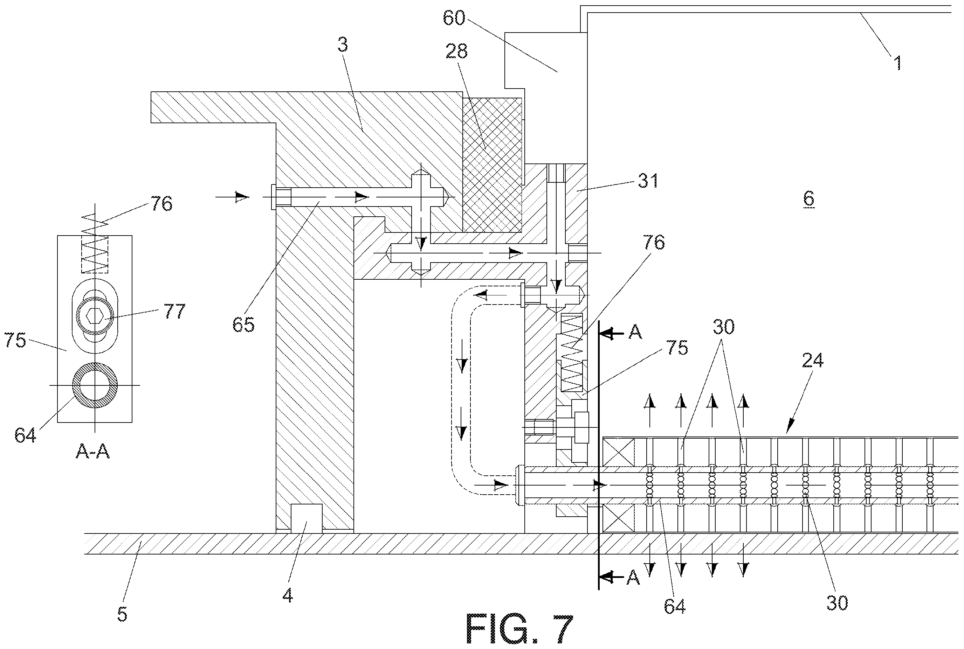

First ,an embodiment of the invention is described using figures 1 to 8 in which the apparatus comprises a tubular configuration housing 1 which consists of two portions 2 which are joined together under the water around the pipe 5 on the area wherein performing the repair is required, so that said housing 1 is fixed on the pipe 5 by some end flanges 3, which also consist of two portions that have a lower edge that fits the configuration of the pipe through a leak-tight joint 3a, so as to form a sealed chamber 6 between the housing 1, the flanges 3 and the pipe 5.

Obviously there are different sizes of flanges 3 and housing 1, depending on the size of the pipe 5 to be repaired.

Inside the sealed chamber 6 a ring gear 31 is included that is arranged in proximity to one of the flanges 3, so that said ring gear 31 engages an engine 59 through a pinion 60 to produce the angular displacement of the ring gear 31.

Moreover the interior of the sealed chamber 6 comprises two rotating disks 28 that are related to the ring gear 31 so that when the angular displacement thereof is produced, the angular displacement of the rotating disks 28 is carried out simultaneously, which are arranged parallel and in proximity to the flanges 3. The ring gear 31 may be included in one of the rotating disks, such as described in the example shown in Figures 9 and the following ones.

The rotating disks 28 are provided with some recesses 61 for location and retention of the ends of the axis 62 of some coils 44 which are located in a charger 63 provided outside the housing 1, such as it will be described later.

In addition, the apparatus comprises a roller 24 which is fixed to the ring gear 31 and to a rotating disk 28, by means of respective supports 74 that are adjustable in height, which are assisted by a spring 75 and fixed by a screw 76, so that the spring 75 maintains the roller 24 pressing against the surface of the pipe 5.

The roller 24 comprises a tubular axis 64 and a plurality of radial holes 30 which communicate the interior of the tubular axis 64 with the outer surface of the roller 24. The tubular axis 64 is connected to a conduit 65 that runs through the flange 3 and ring gear 31 from which it emerges to connect to an air injection circuit (not shown), and it can also be connected to a dosing circuit of a fluid of a repair chemical product (which has not been represented). At this point it should be noted that since the ring gear 31 will rotate in its operation, a perimeter channel around the flange 3 is envisaged which contacts with the conduit 65 provided in the flange, and all so that the fit between the flange 3 and the ring gear 31 prevents the escape of air and fluid that will circulate through the conduit 65, as it will be described later.

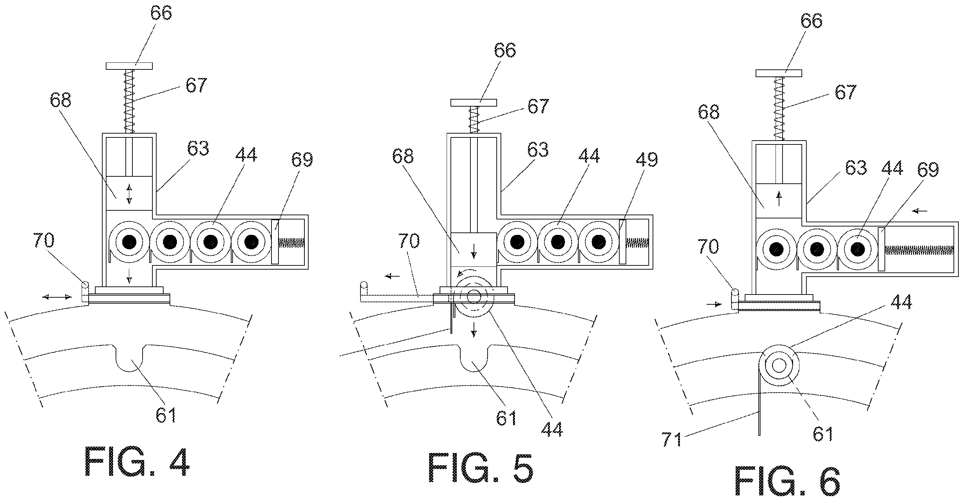

The charger 63 comprises a button 66 assisted by a spring 67, said button 66 is attached to a plunger 68 for performing the expulsion of the coils 44 from inside the charger 63, when acting the button 66 causing the displacement of the plunger 68 which pushes a coil 44 at the time in which the recesses 61 of the rotating disks 28 are located in the vertical of the expulsion area of the charger 63 (Figure 4).

The charger 63 is equipped with a pushing element 69 that pushes the coils every time the expulsion of one of them is done, so that in the area of the plunger 68 which is located in front of the output of the charger 63, there is always arranged a coil 44 ready for expulsion when carrying out the actuation of the button 66.

The output of the charger 63 comprises a hinged lid 70 with sealed closure, that when pressing the coil 44 against the same, causes its opening and after the coil 44 falls in the recess 61, the closure thereof is carried out, for example by assistance by a spring (not shown).

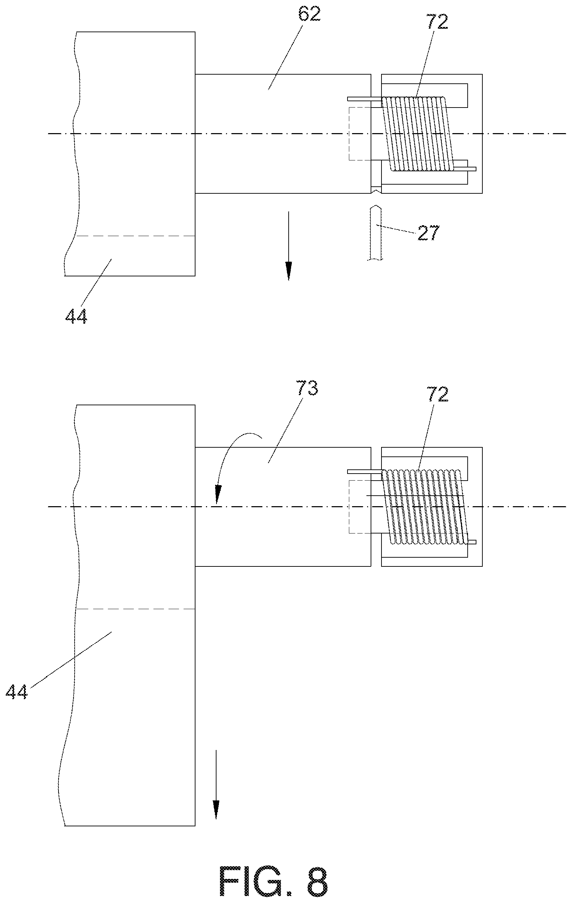

The coils 44 are provided with a traction element 72 of the axis 62 of the coil in the direction of unrolling of the same in its initial unrolling section. An example of a traction element can be a spring 72 which pulls on the axis 62 of the coil 44 in the sense discussed, such as it is shown in Figure 8.

The charger 63 is provided with a retaining and locking element of the coil in its rolled position, as for example may be a ratchet (not shown), which blocks the axis 62 position of the coil 44 in the rolled position so that when the button 66 is activated and a coil 44 is expelled, opening the hinged lid 70, the traction element 72 is unlocked and causes the unrolling of the sheet 71 that is rolled in the coil 44 (Figure 5), so that when the ends of the axis 62 of the coil 44 are located in the recesses 61, there has been an unrolling of the sheet 71, so that it is located on the surface of the pipe 5. The traction element 72 is calculated for carrying out an unrolling of the sheet 71 that allows positioning its end on the surface of the pipe 5. In this position the rotation of the ring gear 31 causes the rotation of the roller 24, both around its tubular axis 64 and the pipe 5, which makes the roller 24 to be located at the end of the sheet 71 pressing it against the surface of the pipe 5, carrying out the adhesion of said sheet 71 on the pipe 5.

Once the device described has been assembled air is injected through the conduit 65, which exits through the radial holes 30 causing the flow of the water introduced into the sealed chamber 6 to the housing 1, which includes a plurality of non-return valves (not shown), through which the expulsion of water outside the sealed chamber 6 is performed, leaving it empty of water. There is the possibility of performing the injection of air through nozzles (not shown) provided in the housing 1.

This situation allows for the introduction of the coils 44 in the sealed chamber 6, as described.

As the ring gear 31 rotates, the roller 24 presses the sheet 71 on the surface of the pipe 5, leading to the unrolling of the same from the coil 44, and its rolling around the pipe 5.

At this point it should be noted that the sheets 71 can be of different types, such as for example preimpregnated with a repair chemical product or without prepreg, in which case it is necessary to apply a repair chemical product to enhance adherence and solidification of the sheet 71 on the pipe 5, for which in this case the application of said chemical product is required, as for example can be a polymer, resin, etc.. on the sheet 71, which is done through the conduit 65, which connects to a fluid dispenser, which is applied to the sheet 71 through the radial holes 30 provided in the roller 24, so as to produce the perfect adherence of the sheet 71 on the pipe 5 and further solidification on the same, leaving the pipe perfectly repaired. Obviously, even using a prepreg sheet, in addition a repair chemical product can be applied additional to the one of the sheet, for achieving a better pipe repair.

Moreover, the device of the invention comprises a stop 73 located in correspondence with the recesses 61 of the disks 28, so that when said recesses 61 pass through the area of the stop 73, it displaces the coil 44 pulling it out of said recesses 61, so the coll 44 without the sheet 71 falls within the sealed chamber 6, from which it will be removed once the repair operation has ended. The stop 73 is integral to the housing 1.

The repair may require the provision of a rolling of a plurality of sheets 71 on the damaged area of the pipe 5, for which in the next spin of the ring gear 31 a new expulsion of a coil 44 is produced when the recesses 61 are located under the hinged lid 70, repeating the described the cycle as many times as necessary to perform the repair of the damage caused to the pipe 5.

The invention relates to the described device and method required to achieve its operation, such as it has been discussed.

In another embodiment of the invention, described with the help of Figures 9 to 24, the apparatus of the invention comprises a tubular configuration housing 1 which consists of two portions 2 which are joined together by an extensible element 7 that allows performing the separation/approximation of said portions, and thus allow to locate the housing 1 around a pipe 5. The extensible element is, for example, a pneumatic cylinder 7.

The portions 2 are related to each other by guides 8 that facilitate the separation/approximation of said portions 2 when the pneumatic cylinder 7 acts.

The portions 2 are fixed to the pipe 5 by means of end flanges 3 that have an inner edge 4 which is adapted to the configuration of the pipe 5 by a leak-tight joint 3a.

On each of the flanges 3 there is fixed a collar segment 9 by means of an articulated arm 10, which articulates both on the collar segments 9, and on the end flanges 3.

Each of the collar segments 9 is provided with connecting means between said segments, which in the example of embodiment of Figures 9-24 are determined by platens 11 by means of which the attachment between the two segments of the collar 9 takes place. Figures 25-30 show an embodiment in which the attachment means are determined by a mechanical seal, as it will be described later. Furthermore, the collar segments 9 are equipped with some braking means of the housing 1 on the pipe 5, the functionality of which will be described later, and which are composed of wedges 12 arranged on inclined guides 13 provided in supports 14 fixed to the inner face of the collar segments 9 so that the wedges 12 can move along the inclined guides 13. Also the supports 14 are integral with some guiding pivots 15 wherein is located in a ring segment 16 that is attached to the wedges 12 and to an inflatable piston 17 which is also provided on the inside of the collar segments 9, so that when there is inflation of the inflatable piston 17, there is elevation of the ring segments 16 guided by the guiding pivots, in which displacement they drag along the wedges 12 sliding by the inclined guides 13, so that these rise and move away from the pipe 5. In turn, when performing the deflation of the piston 17, there is the lowering of the ring segments 16 and the wedges 12 that press against the pipe carrying out the braking of the same when performing its repair.

Also on the inside of the collar segments are provided sliding elements of the housing 1 over the pipe 5, elements that are formed by rollers 18 assisted by a spring 19 with preload to press against the pipe when the collar segments 9 are joined together.

Another element provided on the inside of the collar segments 9, are some feelers 20 that allow for inspection of the pipe. Sensors of any other type from those conventionally known can also be arranged, such as ultrasonic sensors, and also viewing cameras of the image of the pipe can be placed, but in this latter case said viewing cameras are located on the inside of the portions 2, which are not represented since are obvious to the skilled in the art.

Based on the description made, it is easily understood that once the housing 1 portions 2 are located in its separate position around a pipe 5, it is proceeded to carrying out the junction of the collar segments 9 through their platens 11, in which position the rollers 18 press against the pipe 5, as indicated earlier.

This example is described for the application of the housing 1 on a vertical pipe 5, so in this case the housing 1 is arranged around the vertical pipe 5 in the area where it is out of the water, so the arrangement of the housing 1 around the vertical pipe 5, as described earlier, is carried out very easily and without the need of using divers.

Note that one of the portions 2 of the housing 1 is equipped with some transport wheels 21 that in addition to facilitating transport of the housing 1, also allow carrying out the support of the same on a surface provided in the area where the vertical pipe 5 is out of the water.

In addition, the portions 2 are provided with means for fixing a lifting cable, which are determined by hooks 22, wherein are fixed cables of a lifting device for the sliding of the housing 1 on the pipe 5.

Thus, once the collar segments 9 are fixed, and by means of the lifting device the lowering of the housing 1 along the pipe 5 is allowed, so that through the feelers 20 the state of the same is inspected, so that the rollers 18 absorb the irregularities of the pipe 5 by the action of the springs 19 during the sliding of the housing 1 on said pipe 5.

In this way, carrying out the inspection of the pipe until detecting an area that requires repair is allowed, at which point the portions 2 are positioned, and then the pneumatic cylinder 7 is activated performing the approximation between the portions 2 so that the inner edge 4 of the flanges 3, adapts to the configuration of the pipe 5 by a leak-tight joint 3a, the housing 1 defining a contour that surrounds the pipe 5 setting the sealed chamber 6 between the housing 1 and the pipe 5.

Note that the feelers 20, and different elements to be actuated, are connected to a surface equipment that allows performing the functions discussed. In the event that they are electrical connections, these can be performed wirelessly. A possible connection with the housing 1 with conduits that run to the surface, is represented by the reference 23.

Once the sealed chamber 6 has been formed, the inflatable piston 17 is deflated, so that the wedges 12 move along the inclined guides 13 interlocking on the surface of the pipe 5, so that there is the fixing of the housing 1 on the pipe 5.

Next, is proceeded to drain from the sealed chamber 6 the water contained within it, by means for injecting air into the sealed chamber 6, which produce the discharge of the water through non-return valves (not shown) provided in the portions 2 of the housing 1. These means for example may be a compressor that may be located outside the water and connected with the portions 2 wherein some nozzles (not shown) are provided that blow air into the sealed chamber 6, moving the water through non-return valves. The compressor can also be arranged on one of the portions 2 and be actuated from the surface. The invention provides that the nozzles can be fixed or adjustable in different directions through mechanisms of pistons attached to the housing.

At this point it should be mentioned that the portions 2 are provided with some centering feet 58 assisted by a spring, which when performing the approximation of the portions 2, support and press on the surface of the pipe 5, so as to facilitate the centering of the portions 2 when locating them on the pipe 5.

Once the sealed chamber 6 is emptied of water, in the case where the pipe should be cleaned, is envisaged the incorporation of cleaning means comprising a deposit of an abrasive product, and a compressor connected to the nozzles provided in the portions 2 for projecting the abrasive cleaning product over the pipe and then some suction means are activated that suck all the waste produced in the cleaning, through some nozzles.

The suction means can also be used as means for draining the water included in the sealed chamber 6.

Once the pipe is ready to be repaired, the invention provides that its repair can be effected by a roller 24, located inside the sealed chamber 6, which through some arms 27 is fixed on a rotating axis 25 assisted by a spring 26 so that the ends of the rotating axis 25 are attached on two rotating disks 28 arranged parallel to the end flanges 3, the angular displacement of which is guided by bearings 29 fixed in the end flanges 3. To produce the angular displacement of the rotating disks 28, it is envisaged that they are equipped with a ring gear 31 engaging an engine that produces the angular displacement of said rotating disks 28.

By the action of the spring 26, the roller 24 is kept pressing on the surface of the pipe 5, so that when actuating the engine the roller 24 rotates around its axis and around the pipe 5.

In this case the axis of the roller 24 also has a tubular configuration and is connected with deposits of a chemical product, such as a resin, and with some holes 30 cut into the surface of the roller 24 so that when there is the displacement of the roller 24 on the pipe 30, this is impregnated with resin providing it with a coating layer, as a painting, which can determine the repair of said pipe when the damages on the pipe are not high. The number of turns performed by the roller 24 around the pipe 5, varies depending on the needs of the repair to be made in the pipe 5.

The resin deposit can be on the surface, or on the housing 1, so that in either case is in a fixed position, which is why to allow the rotation of the roller 24 on its axis and around the pipe 30, means for connecting the tubular axis of the roller 24 with the resin deposits are provided, for which said connection comprises a first female coupling 32 and a second female coupling 33 which are fixed to the rotating disks 28, so that said couplings 32 and 33 rotate together with the rotating disks 28, and are also connected to the tubular axis of the roller 24.

In correspondence with the first female coupling 32 a first male coupling 35 has been provided, and in correspondence with the second female coupling 33 a second male coupling 36 has been provided. The first and second male couplings 35 and 36 are arranged on a semicircular lane 37 with fixed position and provided around the pipe 5, so that each of said first and second male couplings 35 and 36 are connected to a deposit of resin by a conduit 39, and in turn are assisted by a strap that keeps them in the initial end of the semicircular lane 37.

In addition, in the path traveled by the first and second female couplings 32 and 33 are provided some cams 38, so that these are provided in correspondence with the beginning and end of each lane 37, to produce the movement of said female couplings 36 and 37 overcoming the action of the spring 34.

Based on the description given, it is easily understood that when the first female coupling 32 is coupled to the first male coupling 35, the rotation of the rotating disks 28 causes the displacement of the female couplings 32 and 33, so that the first female coupling 32 drags the first male coupling 35 on the lane 37 overcoming the action of the strap, so when it reaches the end of the lane 37 the cam 38 which is arranged in the initial part of next lane 37, produces the elevation of the second female coupling 33 overcoming the action of its spring 34, so that when the cam 38 stops acting on the second female coupling 33, the spring 34 causes its lowering, coupling on the second male coupling 36, that by means of a conduit 39 is attached to a deposit of resin, so that the resin flows through the second male coupling 36, of the second female coupling 34, until it reaches the tubular axis of the roller 24. Then the first female coupling 32 contacts the cam 38 located at the beginning of the next lane 37, causing its elevation and its disconnection with respect to the first male coupling 35, so that in this way the feeding of the resin to the inside of the tubular axis of the roller 24 is always kept. In the next 180° of angular displacement of the rotating disks 28, again is the first male coupling 35 which is coupled to the first female coupling 32 and then the second female coupling 33 is disconnected from the second male coupling 36, repeating the process for each one of the turns that the roller 24 should perform.

At this point it should be noted that the water drain from inside the sealed chamber 6 can also be done by injecting air into the axis of the roller 24 through the mechanism described for the injection of resin to the tubular axis of the roller 24, but with the difference that in this case instead of resin is applied compressed air.

In the case where the damage to the pipe cannot be repaired by applying a layer of resin, the invention provides other repair means comprising a sealed box 40 that communicates with the sealed chamber 6 through a trapdoor 41, and so that inside the sealed box 40 some telescopic guides 42 assisted by a piston 43 have been envisaged, to locate at the lower end of the telescopic guides 42 a coil 44, that in the embodiment of the invention, the coil 44 is arranged on a support 45 which is located on the telescopic guides 42. The coil 44 has a sheet for repair of pipes of conventional type rolled, so that the coil 44 is arranged on the telescopic guides 42 with a section of its end unrolled and guided over some guiding rollers 46, so that the unrolled section remains in vertical position.

To allow carrying out the repair by means of the sheet of the coil 44, the rolling of it around the pipe 5 should be carried out, for which in the interior of the sealed chamber 6 two arms 47 have been provided, each one of them fixed on the rotating disks 28, so that actuating the piston 43, causes the displacement of the telescopic guides 42 that carry out the opening of the trapdoor 41, with which the coil 44 descends to the interior of the sealed chamber 6, until some end pivots 48 provided on the support 45 of the coil are inserted into a recess 49 provided at the end of the arms 47, which by means of a ball stud 50 produces the entry of the ball in a groove made in the end pivots 48, the coil 44 being fixed in this way on the arms 47, and all so that the end of the sheet of the roller is located on the surface of the pipe 5. In addition, the roller 24 is located in a position in which when performing the displacement of the rotating disks 28 and therefore the displacement of the roller 24 and coil 44, said roller 24 presses against the end of the sheet, carrying out its unrolling, and simultaneously its rolling around the pipe 5.

In this case at the same time that the rolling of the sheet around the pipe 5 is carried out, resin can also be applied through the holes 30 of the roller 24 to achieve a greater repair effect of the pipe 5.

Once the resin has been applied either independently or in conjunction with the sheet, as described, it is expected that the roller 24 is equipped with a lifting/lowering mechanism complemented by the addition of a lever 51 integral to the rotating axis 25 on which the roller 24 is supported by the arms 27 already described so that in the path made by the lever 51, a movable position cam 52 has been provided, the position of which is adjustable by a piston 53, so that when said movable cam 52 is positioned in correspondence with the lever 51, the contact with the movable cam 52 causes the angular displacement of the rotating axis 25 overcoming the action of the spring 26, causing the lifting of the roller 24, so that by using a pin 54 the interlocking of the rotating axis 25 in the position wherein the roller 24 is lifted occurs, as shown schematically in Figure 12.

In this way, the roller is prevented from sticking on the surface of the pipe, once the resin has been applied and the drying of the same has been done.

To carry out again the lowering of the roller 24 in its position on the pipe 5, the incorporation of a wedge 55 is envisaged, arranged in the path of a movable element 56 which is integral with the pin 54, so that when the wedge 55 contacts the movable element 56, overcoming the action of a spring 57 that assists it, causes the displacement of the pin 54 and the unlocking of the rotating axis 25, which by the action of the spring 26, descends until pressing the surface of the pipe 5, for carrying out a new repair.

To facilitate the chemical reaction of the resin, and accelerate drying, the incorporation of temperature control means for drying the repair chemical product is envisaged, which consist of heating resistances of the sealed chamber 6 and the pipe segment wherein the housing is installed so that the chemical reaction and solidification of the applied repair chemical product is facilitated- The means of temperature control perform an up/down temperature control that is carried out through the heating resistances, or it can also be carried out through the application of air produced by the draining means, applying hot or cold air through the nozzles or through the holes 30, as described, and thereby facilitate the chemical reaction and solidification of the repair chemical product

It is noted that in the case where the repair of a pipe requires filling cavities detected on its surface, it is expected that the housing comprises a trigger element by compressed air of resin balls for filling said cavities detected in the surface of the pipe.

Once the repair of the pipe has been carried out, it is again proceeded to separate the portions 2 actuating the extensible element 7, allowing to continue the sliding of the housing on the pipe 5, until finding a new area of damage, proceeding to repair it in the way already mentioned.

With the help of Figures 25 to 30 another example of embodiment of the invention is described, in which is envisaged that the sliding of the housing 1 on the pipe 5 can overcome obstacles included in the pipe itself, such as it can be, for example, a flange 77 of those conventionally used to connect pipe sections.

In this case the invention comprises an extensible cylinder 78 the ends of which are hingedly attached to the articulated arms 10 of the collar segments 9 and to one end of the portions 2 of the housing 1. This configuration allows the approximation/separation of the collar segments by the activation of the extensible cylinders 78.

One of the collar segments 9 is provided at its ends with bars 79 that emerge tangentially from said ends and that are arranged in some sliding bushes 80 provided at the ends of another collar segment 9 to carry out the guided approximation/separation of the collar segments.

The ends of the portions 2 of the housing 1 are provided with some second means for guiding the housing on the pipe 5, which comprise two circular sectors 81 which are arranged on a guiding rail 82 and assisted by a telescopic cylinder 83, each circular sector 81, guiding rail 82 and telescopic cylinder 83 being mounted on a support 84 which is fixed to the flanges 3, so that they are located between said flanges 3 and the first guiding means comprising the collar segments 9, and separated from these at a distance corresponding to the width of a flange 77.

Moreover, each of the circular sectors 81 includes second sliding elements made of second rollers 85, so that once the housing 1 is sliding on a pipe 5, through the first sliding means described, at the arrival of the collar segments 9 to a flange 77 of the pipe the telescopic cylinders 83 are actuated so that the circular sectors 81 move contacting the second rollers 85 on the pipe 5, and then the extensible cylinders 78 are actuated to separate the collar segments 9, continuing the sliding and guiding of the housing on the pipe 5, through the second sliding means, until the collar segments 9 overcome the flange 77, at which point the extensible cylinders 78 are actuated again to join the collar segments 9, leaning again the first rollers 18 on the pipe 5, and then the telescopic cylinders 83 are actuated separating the second rollers 85 from the pipe by pulling the sliding caps 80 by the telescopic cylinders 83 moving them on the guiding rails 82, thereby continuing the sliding of the housing 1 on the pipe 5 by the first guiding means.

The above described process is repeated for the other end of the portions 2 of the housing 1, i.e. for the other end flanges 3 when the corresponding collar segments 9 arrive to the area of the flange 78 of the pipe 5.

To complete the process described, the invention provides for the attachment means between the collar segments 9 to be constituted by a mechanical seal comprising a movable profile 86 which is provided with an opening 87 and assisted by a pneumatic cylinder 88 arranged in the ends of one of the collar segments. The ends of the other collar segment 9, comprise a laminar portion 89 that by placing the ends of the proximate collar segments 9 and acting the pneumatic cylinder 88, the laminar portion 89 is located in the opening 87 of the movable profile 86 so that the automatic closing of the collar segments 9 is performed. Also by acting the pneumatic cylinders 88 the movable profile 86 is allowed to be removed, so that its opening 87 is moved away from the laminar portion 89, releasing the ends of the collar segments 9, and allows carrying out the separation of the same, such as described above, when a flange 77 is detected.

The mechanical seal described can withstand the efforts, such as for example marine currents, which could lead to separation of the collar segments 9 during the guiding of the housing 1 on the pipe 5, so that said efforts are absorbed by the mechanical seal and not by the extensible cylinders 78 carrying out the opening and closing of the collar segments 9.

Therefore, the mechanical seal prevents the separation of the collar segments 9 during the guiding of the housing 1 on the pipe 5.

Next, the various references used in the examples of embodiment are listed, to facilitate the follow up of their explanation:
1.- Housing
2.- Portions (of the housing)
3.- End flanges
3a.- Leak-tight joint
4.- Lower edge (of the end flanges)
5.- Pipe
6.- Sealed chamber
7- Extensible element
8.- Guides
9.- Collar segments
10.- Articulated arm
11.- Platens
12.- Wedge
13.- Inclined guide
14.- Support
15.- Guide pivots
16.- Ring segments
17.- Inflatable piston
18.- First rollers, belonging to first guiding means
19.- Spring
20.- Feelers
21.- Transport wheels
22.- Hooks
23.- Connections with surface
24.- Roller
25.- Rotating axis
26.- Spring
27.- Arms
28.- Rotating disks
29.- Bearings
30.- Radial holes
31.- Ring gear
32.- First female coupling
33.- Second female coupling
34.- Spring
35.- First male coupling
36.- Second male coupling
37.- Lane
38.- Cams
39.- Connection of 35 and 36 with resin deposit
40.- Sealed box
41.- Trapdoor
42.- Telescopic guides
43.- Piston
44.- Coil
45.- Coil support
46.- Guiding rollers
47.- Arms
48.- End pivots
49.- Recess
50.- Ball stud
51.- Lever
52.- Movable position cam
53.- Piston
54.- Pin
55.- Wedge
56.- Movable element
57.- Spring
58.- Centering feet
59.- Engine
60.- Pinion
61.- Recesses
62.- Ends, of the axis of the coil 44
63.- Charger
64.- Tubular axis, of the roller 24
65.- Conduit
66.- Button
67.- Spring
68.- Plunger
69.- Pushing element
70.- Movable lid
71.- Sheet, of the coil 44
72.- Traction element
73.- Stop
74.- Height-adjustable supports
75.- Spring
76.- Screw
77.- Flange
78.- Extensible cylinder
79.- Bar
80.- Sliding caps
81.- Circular sectors
82.- Guiding rail
83.- Telescopic cylinder
84.- Support
85.- Second rollers, belonging to the second sliding elements
86.- Movable profile
87.- Opening
88.- Pneumatic cylinder
89.- Laminar portion

## Claims

1. APPARATUS FOR STRUCTURAL REPAIR OF PIPES IMMERSED IN A FLUID, at least comprising:
- one housing (1) with tubular configuration that is equipped with two portions (2) joined together and attached to a pipe (5) by means of end flanges (3) including an inner edge (4) that fits the configuration of said pipe (5) by a leak-tight joint (3a), being the contour housing (1) that surrounds the pipe (5), establishing a sealed chamber (6) between the housing (1) and the pipe (5),
- means for draining water from the sealed chamber (6), actuatable after forming the sealed chamber, and
- pipe repair means provided in the sealed chamber (6) actuatable after draining the water from the sealed chamber, the pipe repair means being arranged to carry out repair of the pipe by way of painting and/or by applying a repair sheet around the pipe,
wherein the portions of the housing are configured to be separable after the pipe is repaired by the repair means to allow repeating of the repair process by the repair means in a new damaged area.

2. APPARATUS FOR STRUCTURAL REPAIR OF PIPES IMMERSED IN A FLUID, according to claim 1, **characterized in that** it further comprises:
- at least one extensible element (7) fixed to the two portions (2), for the movement of separation/approximation of said portions (2),
- guides (8) for the movement of separation/approximation of said portions (2),
- first guiding means of the housing on the pipe, comprising:
• at least two complementary collar segments (9), each hingedly attached to at least one end of one of the portions (2) of the housing (1);
• attachment means between collar segments, and
• first sliding elements on the pipe (5), arranged in the collar segments (9),
- wherein the at least extensible element (7) is configured in such a way that when carrying out the separation of the portions (2) its location around the pipe (5) is allowed and when approximating it they couple on the pipe forming the sealed chamber (6),
- and where said collar segments (9) are configured in such a way that once the portions (2) of the housing (1) are arranged separated around the pipe (5), when fixing the collar segments (9) together, the sliding means lean on the pipe allowing sliding or guiding of the housing (1) on said pipe (5) to an area to be repaired.

3. APPARATUS FOR STRUCTURAL REPAIR OF PIPES IMMERSED IN A FLUID, according to claim 1, **characterized in that** the repair means of the pipe comprise:
- two rotating disks (28) arranged parallel to the end flanges (3) and that are associated with a ring gear (31) the actuation of which causes the rotation of the rotating disks around the pipe (5),
- an engine that engages the ring gear (31) to produce the rotation of the rotating disks (28) around the pipe (5),
- a roller (24) equipped with a tubular axis which communicates with holes (30) provided on its surface, which can rotate on its tubular axis and is arranged on the rotating disks (28) for locating the roller (24) on the surface of the pipe (5) pressing on it,
- at least one connection of the tubular axis of the roller (24) with a deposit of a repair chemical product for when turning the roller (24) on the surface of the pipe (5), apply the repair chemical product to said surface of the pipe (5) through its holes (30), covering and repairing said surface when said repair chemical product solidifies.

4. APPARATUS FOR STRUCTURAL REPAIR OF PIPES IMMERSED IN A FLUID, according to claim 3, **characterized in that** the repair means of the pipe comprise:
- a sealed box (40) arranged longitudinally in one of the portions (2) of the housing (1), which in turn comprises:
• a trapdoor (41) that communicates with the sealed chamber,
• telescopic guides (42) wherein it is arranged,
• a coil (44) of a pipe repair sheet, comprising two end pivots (48), which is arranged with an end section of the sheet unrolled and guided through
• guiding rollers (46) that hold the unrolled section of the sheet in vertical position,
• a piston (43) for displacement of said telescopic guides (42) to a position in which the coil (44) is positioned and fixed in
- an arm (47) provided in each of the rotating disks (28), and which is provided with a recess (49) for placement and fixation of the pivots (48) of the roller (24);
the piston (43), the telescopic guides (42) and the arms (47) being configured in such a way that when the piston (43) is actuated it moves the telescopic guides (42) opening the trapdoor (41) and the pivots (48) of the coil (44) being accommodated in the recesses (49) of the arms (47), the end of the sheet being unrolled on the surface of the pipe (5); and said arms (47) being located in correspondence with the roller (24) so that when positioning the end of the sheet of the coil (44) on the surface of the pipe (5), when performing the rotation of the rotating disks (28), the roller (24) is placed on the edge of the sheet pressing it against the surface of the pipe (5); applying the repair chemical product on the sheet of the coil (44) to produce its adherence on the pipe and its subsequent solidification, repairing said pipe.

5. APPARATUS FOR STRUCTURAL REPAIR OF PIPES IMMERSED IN A FLUID, according to claim 3, **characterized in that** the repair means comprise:
- at least one coil (44) provided with an axis (2) and a traction element (72) to pull its axis in the direction of unrolling of the coil (44) in its initial section of unrolling,
- recesses (61) provided on the rotating disks (28), for location of the ends of the axis (2) of the coil (44),
- a sealed charger (63) of coils (44), arranged longitudinally in one of the portions of the housing (1) which includes means for sealed closure of introduction of the coils (44) in the sealed chamber (6); and the sealed charger including a retaining and locking element of the coil (44) in its rolled position, and means for expulsion of the coil into the sealed chamber (6), which expulsion positions the axis (62) of the coil in the recesses (61) of the rotating disks (28) and unlocks the rolled position of the coil (44), that by the action of the traction element (72) is unrolled in its final section of rolling, until at least the end of the sheet (71) of the coil is positioned on the surface of the pipe (5),
- the recesses (61) of the rotating disks (28) being located in correspondence with the roller (24) so that when positioning the end of the sheet (71) of the coil (44) on the surface of the pipe (5), establish that the roller is located above the end of the sheet (71) and pressing it against the surface of the pipe (5); applying the repair chemical product on the sheet (71) of the coil (44) to produce its adherence on the pipe and its subsequent solidification, repairing said pipe.

6. APPARATUS FOR STRUCTURAL REPAIR OF PIPES IMMERSED IN A FLUID, according to claim 3, **characterized in that** the means for draining water from the sealed chamber are selected from air injection means into the sealed chamber (6), which produce the draining of water through non-return valves provided in the portions (2) of the housing (1), and suction means of the water contained in the sealed chamber (6); comprising the air injection means an air compressor that is selectively applied on nozzles arranged in the housing (1), and on a conduit that is connected to the tubular axis of the roller (24); said injectors being selected from injectors fitted with fixed nozzles and injectors fitted with nozzles adjustable in different directions through pistons mechanisms adhered to the housing, for moving the nozzles.

7. APPARATUS FOR STRUCTURAL REPAIR OF PIPES IMMERSED IN A FLUID, according to claim 2, **characterized in that** the first sliding elements on the pipe (5) comprise first rollers (18) assisted by a spring (19) with preload to press against the pipe (5) and when carrying out its sliding on said pipe (5), absorb the irregularities of the surface that said pipe may have (5).

8. APPARATUS FOR STRUCTURAL REPAIR OF PIPES IMMERSED IN A FLUID, according to claim 2, **characterized in that** the collar segments (9) comprise means for braking the housing (1) on the pipe (5) to prevent its slippage during repair.

9. APPARATUS FOR STRUCTURAL REPAIR OF PIPES IMMERSED IN A FLUID, according to claim 8, **characterized in that** the braking means comprise wedges (12) arranged in inclined guides (13) provided in supports (14) fixed to the inside of the collar segments (9), for guiding the simultaneous movement of the wedges (12) axially and radially with respect to the pipe (5); the supports (14) being provided with guide pivots (15) in which a ring segment (16) is arranged for each collar segment (9), which are arranged perpendicular to the inside of the collar segment (9); attached to the wedges (12) and to an inflatable piston (17) and assisted by springs (19); for when inflating the inflatable piston (17) causing transverse displacement of the ring segments (16) on the collar segments (9) overcoming the action of the springs (19); and simultaneously causing the radial displacement of the wedges (12) to the outside of the pipe (5) separating it, and when deflating the inflatable piston (17) producing the opposite movement pressing the wedges (17) on the surface of the pipe (5).

10. APPARATUS FOR STRUCTURAL REPAIR OF PIPES IMMERSED IN A FLUID, according to claim 6, **characterized in that** it comprises means for cleaning the pipe (5) that selectively include the air injection means, and a deposit of an abrasive product together with a compressor connected to the nozzles provided in the portions (2) of the housing (1) and combination of both to selectively project the abrasive cleaning product, air and a combination of both on the pipe (5); the cleaning means also having means for suction of the waste produced in the cleaning through nozzles;

11. APPARATUS FOR STRUCTURAL REPAIR OF PIPES IMMERSED IN A FLUID, according to claim 3, **characterized in that** the at least connection of the tubular axis of the roller (24) with a deposit of a repair chemical product includes:
- at first and a second female coupling (32) and (33) contiguous and assisted by a spring (34) which are fixed in one of the rotating disks (28), and that are connected to the tubular axis of the roller (24) through a conduit,
- at first and a second male coupling (35) and (36), each arranged in a fixed position semicircular lane (37), provided around the pipe (5) and connected, each of said first and second male coupling (35) and (36), with a deposit of a repair chemical product; the male couplings (35) and (36) being assisted by a strap that keeps them at the initial end of the lane (37),
- two cams (38) provided in correspondence with the beginning and end of each lane (37) and located in the path of the female couplings (32) and (33) to produce the displacement of said female couplings (32) and (33) overcoming the action of the spring (34);
- where the female couplings (32) and (33), the male couplings (35) and (36) and the cams (38) are configured so that when the first female coupling (32) is coupled to the first male coupling (35), the rotation of the rotating disks (28) produces the angular displacement of the female couplings (32) and (33) dragging the first female coupling (32) to the first male coupling (35) overcoming the action of the strap, so that when reaching the end of the lane (37), the initial cam (38) of the other lane (37) raises the second female coupling (33) and causes its coupling in the second male coupling (36), arranged at the beginning of the lane (37) and then the first jack connector (32) contacts the cam (38) provided at the end of the lane (37), producing the elevation of the first female coupling (32) overcoming the action of its spring (34) and disconnecting it from the first male coupling (35), returning the first male coupling (35) to its initial position by the action of the strap.

12. APPARATUS FOR STRUCTURAL REPAIR OF PIPES IMMERSED IN A FLUID, according to claim 3, **characterized in that** the roller (24) is arranged on the rotating disks by means of a lifting/lowering mechanism of the roller comprising a rotating axis (25) assisted by a spring (26), fixed to the rotating disks (28), and to which are integral two end arms (27) in which is fixed the axis of the roller (24), and also the rotating axis (25) is integral with a lever (51) that can be actuated by a cam (52) with movable position on the rotating disks (28) by means of a piston (53), to position the cam (52) with movable position in the path of the lever (51), producing the angular displacement of the rotating axis (25) overcoming the action of said spring (26), and producing the elevation of the roller (24); that through a locking pin (54) in the rotating axis (25) is kept in the raised position until a wedge (55) arranged in the rotating disks acts on the locking pin (54) causing the lowering of the roller (24) by the action of the spring (26) until it contacts the pipe.

13. APPARATUS FOR STRUCTURAL REPAIR OF PIPES IMMERSED IN A FLUID, according to claim 5, **characterized in that** the expulsion means of the coil comprise a manually operated button (66) attached to a plunger (68), the actuation of which causes the displacement of the plunger (68) that pushes the coil (44), and this pushes a hinged lid (70) which constitutes the means for sealed closure of introduction of the coil simultaneously releasing the retaining and locking element of the axis (62) of the coil (44), unrolling its final section of rolling of the sheet (71).

14. APPARATUS FOR STRUCTURAL REPAIR OF PIPES IMMERSED IN A FLUID, according to claim 5, **characterized in that** the expulsion means of the coil comprise an electromagnet attached to a plunger (68) which is actuated by a control module which by means of a sensor detects when the recesses (61) of the rotating disks (28) are located in the vertical of the coil to be expelled, the actuation of which causes the displacement of the plunger that pushes the coil and this pushes a hinged lid (70) which constitutes the means for sealed closure of introduction of the coil, releasing the traction element (72) of the axis (62) from the coil (44), unrolling its initial section of unrolling of the sheet (71).

15. APPARATUS FOR STRUCTURAL REPAIR OF PIPES IMMERSED IN A FLUID, according to claims 3 or 6, **characterized in that** it comprises means for controlling the temperature of the sealed chamber and the pipe segment provided in the portions (2) of the housing, selected from an up temperature control and a down temperature control that is carried out by means of an element selected from heating resistances, and an element of application of air produced by the draining means, to facilitate the chemical reaction and solidification of the repair chemical product.

16. APPARATUS FOR STRUCTURAL REPAIR OF PIPES IMMERSED IN A FLUID, according to claim 3, **characterized in that** the roller (24) is fixed to the ring gear (31) and the rotating disk (28) by means of a height adjustable support (74) assisted by a spring (75) that keeps the roller (24) pressing against the surface of the pipe (5) adjusting to the different rolling heights of the sheet (71) of the coil (44) by the action of the spring (75).

17. APPARATUS FOR STRUCTURAL REPAIR OF PIPES IMMERSED IN A FLUID, according to claim 2, **characterized in that** the portions (2) comprise centering feet (58) assisted by a spring so that when approximating the portions (2) on the pipe (5), the centering feet (58) lean on the pipe and perform the centering of said portions (2) on said pipe (5) in the approximation of the portions (2).

18. APPARATUS FOR STRUCTURAL REPAIR OF PIPES IMMERSED IN A FLUID, according to claim 1, **characterized in that** it comprises sensors for detecting the state of the pipe (5), which are selected from feelers (20), ultrasonic sensors and cameras to capture images, further comprising a shooting elementof balls of repair chemical product for filling cavities detected in the surface of the pipe, actuated by compressed air,.

19. APPARATUS FOR STRUCTURAL REPAIR OF PIPES IMMERSED IN A FLUID, according to claim 2, **characterized in that** it comprises means for fixing a lifting cable of the portions (2) of the housing (1) for arranging said portions (2) around a vertical pipe out of the water and carrying out its sliding on the pipe (5) by actuation of the lifting cable.

20. APPARATUS FOR STRUCTURAL REPAIR OF PIPES IMMERSED IN A FLUID, according to claim 2, **characterized in that** it comprises an extensible cylinder (78) the ends of which are hingedly attached to the articulated joint (10) of the collar segments (9) and to one end of one of the portions (2) of the housing (1), for carrying out the approximation/separation of said collar segments; one of said collar segments being equipped at the ends with at least one bar (79) that emerges tangentially from said ends and which is arranged in a sliding cap (80) provided at the ends of the other collar segment for carrying out the guided approximation/separation of the collar segments; and the ends of the portions (2) of the housing (1) comprising second means for guiding the housing on the pipe (5), which in turn comprise at least two circular sectors (81) arranged on a guiding rail (82), assisted by a telescopic cylinder (83), and equipped with second-sliding elements (85) on the pipe (5), the circular sectors (81) being arranged between said end of each of the portions (2) of the housing (1) and the collar segments, and separated from said collar segments at least a distance corresponding to the width of an obstacle (77) provided in the pipe (5); the extendable cylinders (78) and the telescopic cylinders (83) being configured so that when carrying out the guided sliding of the housing (1) on the pipe (5) through the first sliding elements (18) of the collar segments, when said collar segments reach to an obstacle of the pipe (5), the second sliding elements (85) lean on the pipe and then the collar segments (9) are separated, to guide the housing on the pipe through the second sliding elements (85) during the obstacle section, which once overcame by the collar segments, the first sliding elements (18) lean on the pipe and then the second sliding elements (85) separate from the pipe, to continue guiding the housing (1) on the pipe through said first sliding elements (18).

21. APPARATUS FOR STRUCTURAL REPAIR OF PIPES IMMERSED IN A FLUID, according to claim 2, **characterized in that** the attachment means between collar segments are constituted by a mechanical seal comprising a movable profile (86) provided with an opening (87) and assisted by a pneumatic cylinder (88), arranged in the ends of one of the collar segments, and the ends of the other collar segment, comprising a laminar portion (89), that when the ends of the collar segments are approximated and the pneumatic cylinder (88) acts, the laminar portion (89) is located in the opening (87) of the movable profile (86), performing the closing.

22. METHOD FOR STRUCTURAL REPAIR OF PIPES IMMERSED IN A FLUID, **characterized in that** it comprises:
- mounting around a pipe (5) an apparatus according to claim 1 comprising a housing (1) with tubular configuration provided with two portions (2) with sealed closure, forming a sealed chamber (6) between the housing (1) and the pipe (5),
- draining the water from inside the sealed chamber (6),
- repairing the pipe by means for repairing the pipe provided in the housing,
- removing the housing (1) for reuse.

23. METHOD FOR STRUCTURAL REPAIR OF PIPES IMMERSED IN A FLUID, according to claim 22, **characterized in that** the drain of the water from inside the sealed chamber (6) is performed by a stage selected from a stage of injection of air that displaces the water outside the chamber through non-return valves and a water suction stage from inside the sealed chamber (6).

24. METHOD FOR STRUCTURAL REPAIR OF PIPES IMMERSED IN A FLUID, according to claim 22, **characterized in that** the stage of mounting a housing (1) with tubular configuration provided with two portions (2) with sealed closure around a pipe (5), forming a sealed chamber (6) between the housing (1) and the pipe (5) comprises:
- actuating an extensible element (7) which is fixed to the portions (2) forming the housing (1) to separate them and place them around a vertical pipe (5) in the area that is out of the water,
- joining two complementary collar segments (9) around the pipe (5), forming part of first means for guiding the housing on the pipe (5), where the collar segments (9) articulate in at least one end of the portions (2) to locate first sliding elements provided in the collar segments (9) by pressing on the surface of the pipe,
- sliding through a lifting device the housing (1) on the pipe (5),
- detecting the state of the pipe during sliding, by means of sensors provided in the apparatus,
- stopping the sliding in an area where damage is detected on the surface of the pipe (5),
- coupling the portions (2) on the surface of the pipe (5) in the area to be repaired, forming a sealed chamber (6),
- locking the position of the housing (1) by the actuation of braking means provided in the apparatus.

25. METHOD FOR STRUCTURAL REPAIR OF PIPES IMMERSED IN A FLUID, according to claim 24, **characterized in that** when carrying out the guided sliding of the housing (1) on the pipe (5) by the collar segments, of the first guiding means, when said collar segments reach an obstacle in the pipe (5), comprises a stage in which second sliding elements (85) of second guiding means of the housing lean on the pipe (5) and then the collar segments are separated during a section of obstacle provided on the pipe, and after overcoming said obstacle by the collar segments, the first sliding elements (18) of the collar segments of the first guiding means lean on the pipe, and then the second sliding elements (85) of the pipe are separated from the second guiding means, to continue guiding the housing (1) on the pipe through said first sliding elements (18) of the first guiding means; repeating the process for the other end of the portions (2) of the housing (1).

26. METHOD FOR STRUCTURAL REPAIR OF PIPES IMMERSED IN A FLUID, according to claim 22, **characterized in that** the repair of the pipe (5) comprises applying a repair chemical product to a tubular axis of a roller (24), arranged in the sealed chamber (6) pressing on the surface of the pipe (5), and applying the repair chemical product to the surface of the pipe (5) through holes (30) provided on the surface of the roller (24) when performing its rotation around its axis and the pipe (5) to produce the coating of the surface of the pipe and its subsequent solidification.

27. METHOD FOR STRUCTURAL REPAIR OF PIPES IMMERSED IN A FLUID, according to claims 22 or 24, **characterized in that** the repair of the pipe comprises the following stages:
- introducing a coil (44) in a tight manner in the sealed chamber (6) being a sheet for repairing pipes rolled in said coil (44), in a position parallel to the pipe (5), with a section of the end of the sheet unrolled for placing it on the pipe (5),
- actuating a roller (24) arranged in the sealed chamber (6) to put pressure on the surface of the pipe (5), performing its rotation around its axis and the pipe (5) to retain the end of the sheet of the coil (44) between the roller (24) and the pipe (5) and unrolling the sheet of the coil (44) around the pipe (5) by moving the roller (24) on said pipe (5), and selectively applying a repair chemical product to the tubular axis of the roller (24), pressing on the surface of the sheet of the coil (44), and applying the repair chemical product to the sheet through the holes (30) provided in the surface of the roller (24) when performing its rotation around its axis and the pipe (5) to produce the coating of the sheet with repair chemical product,
- repeating the process from the introduction into the sealed chamber (6) of a new coil (44), a plurality of times necessary to repair the pipe (5).

28. METHOD FOR STRUCTURAL REPAIR OF PIPES IMMERSED IN A FLUID, according to claims 26 or 27, **characterized in that** it comprises a stage of cleaning of the pipe (5), prior to the repair stage, by means of cleaning means provided in the apparatus, that perform a stage selected from a stage of application of an abrasive cleaning product on the surface of the pipe (5) and an air injection stage; then comprising a stage of suction of the waste resulting from the cleaning carried out; and after the repair stage is carried out a stage of temperature control of the sealed chamber and the pipe segment with control, selected from an up temperature control and a down temperature control that is carried out by an element selected from heating resistances, and an element of application of air, to facilitate the chemical reaction of the repair chemical product, and accelerate its solidification.

## Patentansprüche

1. EINRICHTUNG ZUR STRUKTURELLEN REPARATUR VON ROHREN, DIE IN EIN FLUID EINGETAUCHT SIND, zumindest umfassend:
- ein Gehäuse (1) mit einer rohrförmigen Konfiguration, das mit zwei Abschnitten (2) ausgestattet ist, die miteinander verbunden und die an einem Rohr (5) mit Hilfe von Endflanschen (3) befestigt sind, die einen Innenrand (4) enthalten, der durch eine leckdichte Verbindung (3a) zur Konfiguration des Rohres (5) passt, das das Konturgehäuse (1) ist, das das Rohr (5) umgibt, wobei eine abgedichtete Kammer (6) zwischen dem Gehäuse (1) und dem Rohr (5) errichtet wird,
- Mittel zum Ableiten von Wasser aus der abgedichteten Kammer (6), die nach Bilden der abgedichteten Kammer betätigbar sind, und
- Rohrreparaturmittel, die in der abgedichteten Kammer (6) bereitgestellt sind, die nach Ableiten des Wassers aus der abgedichteten Kammer betätigbar sind, wobei die Rohrreparaturmittel zum Ausführen einer Reparatur des Rohres mittels Anstrich und/oder durch Auftragen eines Reparaturblechs um das Rohr angeordnet sind, wobei die Abschnitte des Gehäuses konfiguriert sind, um nach Reparatur des Rohres durch das Reparaturmittel trennbar zu sein, um eine Wiederholung des Reparaturprozesses durch das Reparaturmittel in einem neuen beschädigten Bereich zu erlauben.

2. EINRICHTUNG ZUR STRUKTURELLEN REPARATUR VON ROHREN, DIE IN EIN FLUID EINGETAUCHT SIND, nach Anspruch 1, **dadurch gekennzeichnet, dass** sie weiter umfasst:
- zumindest ein ausfahrbares Element (7), das an den zwei Abschnitten (2) befestigt ist, für die Bewegung zur Trennung/Annäherung der Abschnitte (2);
- Führungen (8) für die Bewegung zur Trennung/Annäherung der Abschnitte (2);
- erste Führungsmittel des Gehäuses auf dem Rohr, umfassend:
• zumindest zwei komplementäre Kranzsegmente (9), die jeweils scharnierartig an zumindest einem Ende von einem der Abschnitte (2) des Gehäuses (1) befestigt sind;
• Befestigungsmittel zwischen Kranzsegmenten und
• erste Gleitelemente auf dem Rohr (5), die in den Kranzsegmenten (9) angeordnet sind,
- wobei das zumindest eine verlängerbare Element (7) derart konfiguriert ist, dass, wenn die Trennung der Abschnitte (2) ausgeführt wird, seine Positionierung um das Rohr (5) möglich ist, und bei seiner Annäherung diese an dem Rohr ankoppeln, wobei die abgedichtete Kammer (6) gebildet wird,
- und wobei die Kranzsegmente (9) derart konfiguriert sind, dass, sobald die Abschnitte (2) des Gehäuses (1) getrennt um das Rohr (5) angeordnet sind, beim Fixieren der Kranzsegmente (9) aneinander, die Gleitmittel auf dem Rohr liegen, wodurch ein Gleiten oder Führen des Gehäuses (1) auf dem Rohr (5) zu einer zu reparierenden Fläche möglich ist.

3. EINRICHTUNG ZUR STRUKTURELLEN REPARATUR VON ROHREN, DIE IN EIN FLUID EINGETAUCHT SIND, nach Anspruch 1, **dadurch gekennzeichnet, dass** die Reparaturmittel des Rohres umfassen:
- zwei drehende Scheiben (28), die parallel zu den Endflanschen (3) angeordnet sind und die mit einem Zahnkranz (31) verbunden sind, dessen Betätigung die Drehung der drehenden Scheiben um das Rohr (5) bewirkt,
- einen Motor, der mit dem Zahnkranz (31) in Eingriff steht, um die Drehung der drehenden Scheiben (28) um das Rohr (5) zu erzeugen,
- eine Walze (24), die mit einer rohrförmigen Achse ausgestattet ist, die mit Löchern (30), die an ihrer Oberfläche bereitgestellt sind, kommuniziert, die auf ihrer rohrförmigen Achse drehen kann und an den drehenden Scheiben (28) zur Positionierung der Walze (24) auf der Oberfläche des Rohres (5) auf diese pressend angeordnet ist,
- zumindest eine Verbindung der rohrförmigen Achse der Walze (24) mit einem Depot eines chemischen Reparaturprodukts zum Auftragen des chemischen Reparaturprodukts auf die Oberfläche des Rohres (5) durch ihre Löcher (30), wenn die Walze (24) auf der Oberfläche des Rohres (5) gedreht wird, wobei die Oberfläche bedeckt und repariert wird, wenn sich das chemische Reparaturprodukt verfestigt.

4. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die Reparaturmittel des Rohres umfassen:
- einen abgedichteten Kasten (40), der in Längsrichtung in einem der Abschnitte (2) des Gehäuses (1) angeordnet ist, der seinerseits umfasst:
• eine Falltür (41), die mit der abgedichteten Kammer kommuniziert,
• teleskopische Führungen (42), in welchen sie angeordnet ist,
• eine Spule (44) eines Rohrreparaturblechs, umfassend zwei Enddrehpunkte (48), die mit einem Endteil des Blechs angeordnet ist, der abgerollt und hindurchgeführt wird durch
• Führungswalzen (46), die den abgerollten Teil des Blechs in vertikaler Position halten,
• einen Kolben (43) zum Verschieben der teleskopischen Führungen (42) zu einer Position, in der die Spule (44) positioniert und fixiert ist,
- einen Arm (47), der in jeder der drehenden Scheiben (28) bereitgestellt ist und der mit einer Vertiefung (49) zur Platzierung und Fixierung der Drehpunkte (48) der Walze (24) bereitgestellt ist;
wobei der Kolben (43), die teleskopischen Führungen (42) und die Arme (47) derart konfiguriert sind, dass, wenn der Kolben (43) betätigt wird, er die teleskopischen Führungen (42) zum Öffnen der Falltür (41) bewegt und die Drehpunkte (48) der Spule (44) in den Vertiefungen (49) der Arme (47) aufgenommen werden, wobei das Ende des Blechs auf der Oberfläche des Rohres (5) abgerollt wird; und sich die Arme (47) in Korrespondenz mit der Walze (24) befinden, sodass, wenn das Ende des Blechs der Spule (44) auf der Oberfläche des Rohres (5) positioniert wird, wenn die Drehung der drehenden Scheiben (28) durchgeführt wird, die Walze (24) an der Kante des Blechs platziert ist, wobei sie dieses gegen die Oberfläche des Rohres (5) presst; wobei das chemische Reparaturprodukt auf das Blech der Spule (44) aufgetragen wird, um dessen Anhaften an dem Rohr und dessen anschließende Verfestigung zu bewirken, wodurch das Rohr repariert wird.

5. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die Reparaturmittel umfassen:
- zumindest eine Spule (44), die mit einer Achse (2) und einem Zugelement (72) bereitgestellt ist, um ihre Achse in die Richtung des Abrollens der Spule (44) in ihrem anfänglichen Abrollteil zu ziehen,
- Vertiefungen (61), die auf den drehenden Scheiben (28) zur Positionierung der Enden der Achse (2) der Spule (44) bereitgestellt sind,
- ein abgedichteter Einleger (63) von Spulen (44), der in Längsrichtung in einem der Abschnitte des Gehäuses (1) angeordnet ist, das Mittel für einen dichten Verschluss zum Einführen der Spulen (44) in die abgedichtete Kammer (6) enthält; und wobei der abgedichtete Einleger ein Halte- und Verriegelungselement der Spule (44) in ihrer aufgerollten Position und Mittel zum Ausstoßen der Spule in die abgedichtete Kammer (6) enthält, wobei das Ausstoßen die Achse (62) der Spule in den Vertiefungen (61) der drehenden Scheiben (28) positioniert und die aufgerollte Position der Spule (44) entriegelt, die, durch die Wirkung des Zugelements (72), in ihrem abschließenden Rollteil abgerollt wird, bis zumindest das Ende des Blechs (71) der Spule auf der Oberfläche des Rohres (5) positioniert ist,
- wobei sich die Vertiefungen (61) der drehenden Scheiben (28) in Korrespondenz mit der Walze (24) befinden, sodass, wenn das Ende des Blechs (71) der Spule (44) auf der Oberfläche des Rohres (5) positioniert ist, sichergestellt ist, dass sich die Walze über dem Ende des Blechs (71) befindet und dieses gegen die Oberfläche des Rohres (5) presst; wobei das chemische Reparaturprodukt auf das Blech (71) der Spule (44) aufgetragen wird, um dessen Anhaften an dem Rohr und dessen anschließende Verfestigung zu bewirken, wodurch das Rohr repariert wird.

6. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die Mittel zum Ableiten von Wasser aus der abgedichteten Kammer ausgewählt sind aus Mitteln zum Einblasen von Luft in die abgedichtete Kammer (6), die das Ableiten von Wasser durch Rückschlagventile erzeugen, die in den Abschnitten (2) des Gehäuses (1) bereitgestellt sind, und Mitteln zum Absaugen von Wasser, das in der abgedichteten Kammer (6) enthalten ist; wobei die Lufteinblasemittel einen Luftkompressor umfassen, der selektiv an Düsen, die im Gehäuse (1) angeordnet sind, und an einer Leitung, die mit der rohrförmigen Achse der Walze (24) verbunden ist, angewendet wird; wobei die Injektoren ausgewählt sind aus Injektoren, die mit feststehenden Düsen ausgestattet sind, und Injektoren, die mit Düsen ausgestattet sind, die in verschiedene Richtungen durch Kolbenmechanismen einstellbar sind, die zum Bewegen der Düsen am Gehäuse angebracht sind.

7. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** die ersten Gleitelemente auf dem Rohr (5) erste Walzen (18) umfassen, die durch eine Feder (19) mit Vorbeladung unterstützt werden, um gegen das Rohr (5) zu pressen, und wenn diese auf dem Rohr (5) gleiten, sie die Unregelmäßigkeiten der Oberfläche absorbieren, die das Rohr (5) haben könnte.

8. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** die Kranzsegmente (9) Mittel zum Bremsen des Gehäuses (1) auf dem Rohr (5) umfassen, um dessen Rutschen während der Reparatur zu verhindern.

9. EINRICHTUNG ZUR STRUKTURELLEN REPARATUR VON ROHREN, DIE IN EIN FLUID EINGETAUCHT SIND, nach Anspruch 8, **dadurch gekennzeichnet, dass** die Bremsmittel Keile (12) umfassen, die in geneigten Führungen (13) bereitgestellt sind, die in Trägern (14) bereitgestellt sind, die an der Innenseite der Kranzsegmente (9) fixiert sind, um die gleichzeitige Bewegung der Keile (12) axial und radial in Bezug auf das Rohr (5) zu führen; wobei die Stützen (14) mit Führungsdrehpunkten (15) bereitgestellt sind, in welchen ein Ringsegment (16) für jedes Kranzsegment (9) angeordnet ist, die senkrecht zur Innenseite des Kranzsegments (9) angeordnet sind; an den Keilen (12) und an einem aufblasbaren Kolben (17) befestigt sind und durch Federn (19) unterstützt werden; damit, wenn der aufblasbare Kolben (17) aufgeblasen wird, eine Querverschiebung der Ringsegmente (16) auf den Kranzsegmenten (9) bewirkt wird, die die Wirkung der Federn (19) überwindet; und gleichzeitig die radiale Verschiebung der Keile (12) zur Außenseite des Rohres (5) bewirkt wird, wodurch es getrennt wird, und wenn der aufblasbare Kolben (17) entleert wird, die entgegengesetzte Bewegung erzeugt wird, die die Keile (17) auf die Oberfläche des Rohres (5) presst.

10. EINRICHTUNG ZUR STRUKTURELLEN REPARATUR VON ROHREN, DIE IN EIN FLUID EINGETAUCHT SIND, nach Anspruch 6, **dadurch gekennzeichnet, dass** sie Mittel zum Reinigen des Rohres (5) umfasst, die selektiv die Lufteinblasemittel und ein Depot an abrasivem Produkt gemeinsam mit einem Kompressor, der mit den Düsen verbunden ist, die in den Abschnitten (2) des Gehäuses (1) bereitgestellt sind, und eine Kombination von beiden umfassen, um selektiv das abrasive Reinigungsprodukt, Luft und eine Kombination von beiden auf das Rohr (5) zu bringen; wobei die Reinigungsmittel auch Mittel zum Absaugen des Abfalls, der bei der Reinigung erzeugt wird, durch Düsen aufweisen;

11. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die zumindest eine Verbindung der rohrförmigen Achse der Walze (24) mit einem Depot eines chemischen Reparaturprodukts enthält:
- eine erste und eine zweite Buchse (32) und (33), die aneinandergrenzen, und unterstützt durch eine Feder (34), die in einer der drehenden Scheiben (28) fixiert sind, und die mit der rohrförmigen Achse der Walze (24) durch eine Leitung verbunden sind,
- einen ersten und zweiten Stecker (35) und (36), die jeweils in einer halbkreisförmigen Bahn (37) fixierter Position angeordnet sind, die um das Rohr (5) bereitgestellt ist, und jeder von dem ersten und zweiten Stecker (35) und (36) mit einem Depot eines chemischen Reparaturprodukts verbunden ist; wobei die Stecker (35) und (36) durch einen Riemen unterstützt sind, der sie an einem anfänglichen Ende der Bahn (37) hält,
- zwei Nocken (38), die in Korrespondenz mit dem Anfang und Ende jeder Bahn (37) bereitgestellt sind und sich in dem Pfad der Buchsen (32) und (33) befinden, um die Verschiebung der Buchsen (32) und (33) in Überwindung der Wirkung der Feder (34) zu erzeugen;
- wobei die Buchsen (32) und (33), die Stecker (35) und (36) und die Nocken (38) so konfiguriert sind, dass, wenn die erste Buchse (32) mit dem ersten Stecker (35) gekoppelt ist, die Drehung der drehenden Scheiben (28) die Winkelverschiebung der Buchsen (32) und (33) erzeugt, wodurch die erste Buchse (32) in Überwindung der Wirkung des Riemens zum ersten Stecker (35) gezogen wird, sodass, wenn sie das Ende der Bahn (37) erreicht, die anfängliche Nocke (38) der anderen Bahn (37) die zweite Buchse (33) anhebt und deren Kopplung im zweiten Stecker (36) bewirkt, der am Anfang der Bahn (37) angeordnet ist, und dann die erste Buchse (32) mit der Nocke (38) in Kontakt gelangt, die am Ende der Bahn (37) bereitgestellt ist, wodurch die erste Buchse (32) in Überwindung der Wirkung der Feder (34) angehoben und vom ersten Stecker (35) getrennt wird, wobei der erste Stecker (35) durch die Wirkung des Riemens in seine anfängliche Position zurückgeführt wird.

12. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die Walze (24) auf den drehenden Scheiben mittels eines Hebe-/Senkmechanismus der Walze angeordnet ist, der eine Drehachse (25) umfasst, die durch eine Feder (26) unterstützt ist, die an den drehenden Scheiben (28) fixiert ist, und mit der zwei Endarme (27) einstückig ausgebildet sind, in welchen die Achse der Walze (24) fixiert ist, und auch die Drehachse (25) mit einem Hebel (51) einstückig ausgebildet ist, der durch eine Nocke (52) mit beweglicher Position auf den drehenden Scheiben (28) mittels eines Kolbens (53) betätigt werden kann, um die Nocke (52) mit beweglicher Position in dem Pfad des Hebels (51) zu positionieren, wodurch die Winkelverschiebung der Drehachse (25) in Überwindung der Wirkung der Feder (26) erzeugt wird und die Anhebung der Walze (24) erzeugt wird; die durch einen Verriegelungsstift (54) in der Drehachse (25) in der angehobenen Position gehalten wird, bis ein Keil (55), der in den drehenden Scheiben angeordnet ist, auf den Verriegelungsstift (54) wirkt, was die Absenkung der Walze (24) durch die Wirkung der Feder (26) bewirkt, bis sie mit dem Rohr in Kontakt ist.

13. EINRICHTUNG ZUR STRUKTURELLEN REPARATUR VON ROHREN, DIE IN EIN FLUID EINGETAUCHT SIND, nach Anspruch 5, **dadurch gekennzeichnet, dass** die Ausstoßmittel der Spule einen manuell betätigten Knopf (66) umfassen, der an einem Plungerkolben (68) befestigt ist, dessen Betätigung die Verschiebung des Plungerkolbens (68) bewirkt, der die Spule (44) schiebt, und dies einen Scharnierdeckel (70) schiebt, der das Mittel zum dichten Verschließen einer Einführung der Spule darstellt, wobei gleichzeitig das Halterungs- und Verriegelungselement der Achse (62) der Spule (44) freigegeben wird, wobei ihr abschließender Rollteil des Blechs (71) abgerollt wird.

14. EINRICHTUNG ZUR STRUKTURELLEN REPARATUR VON ROHREN, DIE IN EIN FLUID EINGETAUCHT SIND, nach Anspruch 5, **dadurch gekennzeichnet, dass** die Ausstoßmittel der Spule einen Elektromagneten umfassen, der an einem Plungerkolben (68) befestigt ist, der durch ein Steuermodul betätigt wird, das mittels eines Sensors detektiert, wann sich die Vertiefungen (61) der drehenden Scheiben (28) in der Vertikale der auszustoßenden Spule befinden, dessen Betätigung die Verschiebung des Plungerkolbens bewirkt, der die Spule schiebt, und dies einen Scharnierdeckel (70) schiebt, der das Mittel zum dichten Verschließen einer Einführung der Spule darstellt, wobei das Zugelement (72) der Achse (62) von der Spule (44) freigegeben wird, wobei der anfängliche Abrollteil des Blechs (71) abgerollt wird.

15. EINRICHTUNG ZUR STRUKTURELLEN REPARATUR VON ROHREN, DIE IN EIN FLUID EINGETAUCHT SIND, nach Anspruch 3 oder 6, **dadurch gekennzeichnet, dass** sie Mittel zum Steuern der Temperatur der abgedichteten Kammer und des Rohrsegments umfasst, die in den Abschnitten (2) des Gehäuses angeordnet sind, ausgewählt aus einer Aufwärtstemperatursteuerung und einer Abwärtstemperatursteuerung, die mittels eines Elements, das ausgewählt ist aus Heizwiderständen, und eines Elements zum Anwenden von Luft, die durch die Ableitungsmittel erzeugt wird, ausgeführt wird, um die chemische Reaktion und Verfestigung des chemischen Reparaturprodukts zu erleichtern.

16. EINRICHTUNG ZUR STRUKTURELLEN REPARATUR VON ROHREN, DIE IN EIN FLUID EINGETAUCHT SIND, nach Anspruch 3, **dadurch gekennzeichnet, dass** die Walze (24) am Zahnkranz (31) und den drehenden Scheiben (28) mittels einer höheneinstellbaren Stütze (74) fixiert ist, die durch eine Feder (75) unterstützt wird, die die Walze (24) gegen die Oberfläche des Rohres (5) gepresst hält, wobei die verschiedenen Rollhöhen des Blechs (71) der Spule (44) durch die Wirkung der Feder (75) eingestellt werden.

17. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** die Abschnitte (2) Zentrierfüße (58) umfassen, die durch eine Feder unterstützt sind, sodass, wenn die Abschnitte (2) auf dem Rohr (5) angenähert werden, die Zentrierfüße (58) auf dem Rohr liegen und die Zentrierung der Abschnitte (2) auf dem Rohr (5) in der Annäherung der Abschnitte (2) ausführen.

18. EINRICHTUNG ZUR STRUKTURELLEN REPARATUR VON ROHREN, DIE IN EIN FLUID EINGETAUCHT SIND, nach Anspruch 1, **dadurch gekennzeichnet, dass** sie Sensoren zum Detektieren des Zustands des Rohres (5) umfasst, die ausgewählt sind aus Fühlern (20), Ultraschallsensoren und Kameras, um Bilder aufzunehmen, weiter umfassend ein Schießelement für Kugeln eines chemischen Reparaturprodukts zum Auffüllen von Hohlräumen, die in der Oberfläche des Rohres detektiert werden, das durch Pressluft betätigt wird.

19. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** sie Mittel zum Fixieren eines Hebekabels der Abschnitte (2) des Gehäuses (1) zum Anordnen der Abschnitte (2) um ein vertikales Rohr außerhalb des Wassers und zum Ausführen ihres Gleitens auf dem Rohr (5) durch Betätigen des Hebekabels umfasst.

20. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** sie einen ausfahrbaren Zylinder (78) umfasst, dessen Enden scharnierartig an der Gelenkverbindung (10) der Kranzsegmente (9) und an einem Ende eines der Abschnitte (2) des Gehäuses (1) befestigt sind, zur Ausführung der Annäherung/Trennung der Kranzsegmente; wobei eines der Kranzsegmente an den Enden mit zumindest einem Stab (79) ausgestattet ist, der tangential von den Enden absteht und der in einer Gleitkappe (80) angeordnet ist, die an den Enden des anderen Kranzsegments bereitgestellt ist, zum Ausführen der geführten Annäherung/Trennung der Kranzsegmente; und die Enden der Abschnitte (2) des Gehäuses (1) zweite Mittel zum Führen des Gehäuses auf dem Rohr (5) umfassen, die ihrerseits zumindest zwei kreisförmige Sektoren (81) umfassen, die auf einer Führungsschiene (82) angeordnet sind, unterstützt durch einen teleskopischen Zylinder (83), und ausgestattet mit zweiten Gleitelementen (85) auf dem Rohr (5), wobei die kreisförmigen Sektoren (81) zwischen dem Ende jedes der Abschnitte (2) des Gehäuses (1) und den Kranzsegmenten angeordnet sind und von den Kranzsegmenten zumindest mit einem Abstand getrennt sind, der der Breite eines Hindernisses (77) entspricht, das im Rohr (5) bereitgestellt ist;
wobei die ausfahrbaren Zylinder (78) und die teleskopischen Zylinder (83) so konfiguriert sind, dass, wenn das geführte Gleiten des Gehäuses (1) auf dem Rohr (5) durch die ersten Gleitelemente (18) der Kranzsegmente ausgeführt wird, wenn die Kranzsegmente ein Hindernis des Rohres (5) erreichen, die zweiten Gleitelemente (85) auf dem Rohr liegen und dann die Kranzsegmente (9) getrennt werden, um das Gehäuse auf dem Rohr durch die zweiten Gleitelemente (85) während des Hindernisteils zu führen, wobei, sobald dieser durch die Kranzsegmente überwunden ist, die ersten Gleitelemente (18) auf dem Rohr liegen und dann die zweiten Gleitelemente (85) vom Rohr getrennt werden, um das Gehäuse (1) weiter durch die ersten Gleitelemente (18) auf dem Rohr zu führen.

21. EINRICHTUNG ZUR STRUKTURELLEN REPARATUR VON ROHREN, DIE IN EIN FLUID EINGETAUCHT SIND, nach Anspruch 2, **dadurch gekennzeichnet, dass** die Befestigungsmittel zwischen Kranzsegmenten aus einer mechanischen Dichtung bestehen, die ein bewegliches Profil (86) umfasst, das mit einer Öffnung (87) bereitgestellt ist und durch einen pneumatischen Zylinder (88) unterstützt wird, der in den Enden eines der Kranzsegmente, und den Enden des anderen Kranzsegments, die einen Laminarabschnitt (89) umfassen, angeordnet ist, sodass, wenn die Enden der Kranzsegmente sich nähern und der pneumatische Zylinder (88) arbeitet, sich der Laminarabschnitt (89) in der Öffnung (87) des beweglichen Profils (86) befindet, um den Verschluss durchzuführen.

22. VERFAHREN ZUR STRUKTURELLEN REPARATUR VON ROHREN, DIE IN EIN FLUID EINGETAUCHT SIND, **dadurch gekennzeichnet, dass** es umfasst:
- Montage um ein Rohr (5) einer Einrichtung nach Anspruch 1, umfassend ein Gehäuse (1) mit einer rohrförmigen Konfiguration, das mit zwei Abschnitten (2) mit dichtem Verschluss bereitgestellt ist, die eine abgedichtete Kammer (6) zwischen dem Gehäuse (1) und dem Rohr (5) bilden,
- Ableiten des Wassers aus dem Inneren der abgedichteten Kammer (6),
- Reparieren des Rohres durch Mittel zur Reparatur des Rohres, die im Gehäuse bereitgestellt sind,
- Entfernen des Gehäuses (1) zur Wiederverwendung.

23. VERFAHREN ZUR STRUKTURELLEN REPARATUR VON ROHREN, DIE IN EIN FLUID EINGETAUCHT SIND, nach Anspruch 22, **dadurch gekennzeichnet, dass** das Ableiten des Wassers aus dem Inneren der abgedichteten Kammer (6) durch eine Stufe durchgeführt wird, die ausgewählt ist aus einer Stufe zum Einblasen von Luft, die das Wasser aus der Kammer durch Rückschlagventile hinausdrängt, und einer Wasseransaugstufe aus dem Inneren der abgedichteten Kammer (6).

24. VERFAHREN ZUR STRUKTURELLEN REPARATUR VON ROHREN, DIE IN EIN FLUID EINGETAUCHT SIND, nach Anspruch 22, **dadurch gekennzeichnet, dass** die Stufe zur Montage eines Gehäuses (1) mit einer rohrförmigen Konfiguration, das mit zwei Abschnitten (2) mit dichtem Verschluss um ein Rohr (5) bereitgestellt ist, die eine abgedichtete Kammer (6) zwischen dem Gehäuse (1) und dem Rohr (5) bilden, umfasst:
- Betätigen eines ausfahrbaren Elements (7), das an den Abschnitten (2) befestigt ist, die das Gehäuse (1) bilden, um diese zu trennen und sie um ein vertikales Rohr (5) in dem Bereich zu platzieren, der außerhalb des Wassers liegt,
- Verbinden von zwei komplementären Kranzsegmenten (9) um das Rohr (5), die Teil erster Mittel zum Führen des Gehäuses auf dem Rohr (5) bilden, wobei die Kranzsegmente (9) an zumindest einem Ende der Abschnitte (2) gelenkig sind, um erste Gleitelemente zu lokalisieren, die in den Kranzsegmenten (9) bereitgestellt sind, indem sie auf die Oberfläche des Rohres gepresst werden,
- Gleiten, durch eine Hebeeinrichtung, des Gehäuses (1) auf dem Rohr (5),
- Detektieren des Zustands des Rohres während des Gleitens mittels Sensoren, die in der Einrichtung bereitgestellt sind,
- Stoppen des Gleitens in einem Bereich, wo eine Beschädigung an der Oberfläche des Rohres (5) detektiert wird,
- Koppeln der Abschnitte (2) an die Oberfläche des Rohres (5) in einem zu reparierenden Bereich, wodurch eine abgedichtete Kammer (6) gebildet wird.
- Verriegeln der Position des Gehäuses (1) durch Betätigung von Bremsmitteln, die in der Einrichtung bereitgestellt sind.

25. VERFAHREN ZUR STRUKTURELLEN REPARATUR VON ROHREN, DIE IN EIN FLUID EINGETAUCHT SIND, nach Anspruch 24, **dadurch gekennzeichnet, dass**, wenn das geführte Gleiten des Gehäuses (1) auf dem Rohr (5) durch die Kranzsegmente des ersten Führungsmittels ausgeführt wird, wenn die Kranzsegmente ein Hindernis in dem Rohr (5) erreichen, es eine Stufe umfasst, in der zweite Gleitelemente (85) zweiter Führungsmittel des Gehäuses auf dem Rohr (5) liegen und dann die Kranzsegmente während eines Teils eines Hindernisses, das auf dem Rohr bereitgestellt ist, getrennt werden und nach Überwindung des Hindernisses durch die Kranzsegmente die ersten Gleitelemente (18) der Kranzsegmente der ersten Führungsmittel auf dem Rohr liegen und dann die zweiten Gleitelemente (85) des Rohres von den zweiten Führungsmitteln getrennt werden, um das Gehäuse (1) auf dem Rohr durch die ersten Gleitelemente (18) der ersten Führungsmittel weiter zu führen; Wiederholen des Prozesses für das andere Ende der Abschnitte (2) des Gehäuses (1).

26. VERFAHREN ZUR STRUKTURELLEN REPARATUR VON ROHREN, DIE IN EIN FLUID EINGETAUCHT SIND, nach Anspruch 22, **dadurch gekennzeichnet, dass** die Reparatur des Rohres (5) ein Auftragen eines chemischen Reparaturprodukts auf eine röhrenförmige Achse einer Walze (24) umfasst, die in der abgedichteten Kammer (6) angeordnet ist, wobei sie auf die Oberfläche des Rohres (5) presst, und Auftragen des chemischen Reparaturprodukts auf die Oberfläche des Rohres (5) durch Löcher (30), die an der Oberfläche der Walze (24) bereitgestellt sind, wenn deren Drehung um ihre Achse und das Rohr (5) durchgeführt wird, um die Beschichtung der Oberfläche des Rohres und deren anschließende Verfestigung zu erzeugen.

27. VERFAHREN ZUR STRUKTURELLEN REPARATUR VON ROHREN, DIE IN EIN FLUID EINGETAUCHT SIND, nach Ansprüchen 22 oder 24, **dadurch gekennzeichnet, dass** die Reparatur des Rohres die folgenden Stufen umfasst:
- Einführen einer Spule (44) in festsitzender Weise in die abgedichtete Kammer (6), die ein Blech zur Reparatur von Rohren ist, das in der Spule (44) aufgerollt ist, in einer Position parallel zum Rohr (5), wobei ein Teil des Endes des Blechs zur Platzierung auf dem Rohr (5) abgerollt ist,
- Betätigen einer Walze (24), die in der abgedichteten Kammer (6) angeordnet ist, um Druck auf die Oberfläche des Rohres (5) auszuüben, wobei sie ihre Drehung um ihre Achse und das Rohr (5) ausführt, um das Ende des Blechs der Spule (44) zwischen der Walze (24) und dem Rohr (5) zu halten, und Abrollen des Blechs der Spule (44) um das Rohr (5) durch Bewegen der Walze (24) auf dem Rohr (5), und selektives Auftragen eines chemischen Reparaturprodukts auf die rohrförmige Achse der Walze (24), die auf die Oberfläche des Blechs der Spule (44) presst, und Auftragen des chemischen Reparaturprodukts auf das Blech durch die Löcher (30), die in der Oberfläche der Walze (24) bereitgestellt sind, während sie ihre Drehung um ihre Achse und das Rohr (5) durchführt, um die Beschichtung des Blechs mit chemischem Reparaturprodukt zu erzeugen,
- Wiederholen des Prozesses von der Einführung in die abgedichtete Kammer (6) einer neuen Spule (44) eine Vielzahl von Malen, die zur Reparatur des Rohres (5) notwendig ist.

28. VERFAHREN ZUR STRUKTURELLEN REPARATUR VON ROHREN, DIE IN EIN FLUID EINGETAUCHT SIND, nach Ansprüchen 26 oder 27, **dadurch gekennzeichnet, dass** es vor der Reparaturstufe eine Stufe zum Reinigen des Rohres (5) durch Reinigungsmittel umfasst, die in der Einrichtung bereitgestellt sind, die eine Stufe durchführen, ausgewählt aus einer Stufe eines Auftragens eines abrasiven Reinigungsprodukts auf die Oberfläche des Rohres (5) und einer Lufteinblasstufe; dann umfassend eine Stufe zum Ansaugen des Abfalls, der aus der ausgeführten Reinigung resultiert; und nach Ausführung der Reparaturstufe eine Stufe zur Temperatursteuerung der abgedichteten Kammer und des Rohrsegments mit Steuerung, ausgewählt aus einer Aufwärtstemperatursteuerung und einer Abwärtstemperatursteuerung, die durch ein Element, ausgewählt aus Heizwiderständen, und ein Element einer Luftanwendung ausgeführt wird, um die chemische Reaktion des chemischen Reparaturprodukts zu erleichtern und seine Verfestigung zu beschleunigen.

## Revendications

1. APPAREIL POUR LA RÉPARATION STRUCTURELLE DE CANALISATIONS IMMERGÉES DANS UN FLUIDE, comprenant au moins :
- une ossature (1) à configuration tubulaire qui est équipée de deux portions (2) reliées entre elles et attachée à une canalisation (5) au moyen de brides d'extrémité (3) comportant un bord interne (4) qui épouse la configuration de ladite canalisation (5) par un joint étanche (3a), constituant l'ossature de contour (1) qui entoure la canalisation (5), établissant une chambre étanche (6) entre l'ossature (1) et la canalisation (5),
- des moyens pour vidanger l'eau de la chambre étanche (6), pouvant être actionnés après formation de la chambre étanche, et
- des moyens de réparation de canalisation pourvus dans la chambre étanche (6) pouvant être actionnés après vidange de l'eau de la chambre étanche, les moyens de réparation de canalisation étant agencés pour effectuer la réparation de la canalisation par peinture et/ou par application d'une feuille de réparation autour de la canalisation,
dans lequel les portions de l'ossature sont configurées pour pouvoir se séparer une fois la canalisation réparée par les moyens de réparation pour permettre la répétition du processus de réparation par les moyens de réparation dans une nouvelle zone endommagée.

2. APPAREIL POUR LA RÉPARATION STRUCTURELLE DE CANALISATIONS IMMERGÉES DANS UN FLUIDE, selon la revendication 1, **caractérisé en ce qu'**il comprend en outre :
- au moins un élément extensible (7) fixé aux deux portions (2), pour permettre le mouvement de séparation ou de rapprochement desdites portions (2),
- des guides (8) pour permettre le mouvement de séparation ou de rapprochement desdites portions (2)
- des premiers moyens de guidage de l'ossature sur la canalisation, comprenant :
• au moins deux segments de collier complémentaires (9), attachés chacun de façon articulée à au moins une extrémité d'une des portions (2) de l'ossature (1) ;
• des moyens d'attache entre les segments de collier, et
• des premiers éléments de glissement sur la canalisation (5), agencés dans les segments de collier (9),
- dans lequel l'au moins un élément extensible (7) est configuré d'une manière telle que lorsque s'effectue la séparation des portions (2), son emplacement autour de la canalisation (5) est autorisé et lors de leur rapprochement elles s'accouplent sur la canalisation en formant la chambre étanche (6),
- et où lesdits segments de collier (9) sont configurés d'une manière telle qu'une fois que les portions (2) de l'ossature (1) sont agencées séparément autour de la canalisation (5), lors de la fixation des segments de collier (9) l'un à l'autre, les moyens de glissement s'appuient sur la canalisation, ce qui permet à l'ossature (1) de glisser ou d'être guidée sur ladite canalisation (5) jusqu'à une zone à réparer.

3. APPAREIL POUR LA RÉPARATION STRUCTURELLE DE CANALISATIONS IMMERGÉES DANS UN FLUIDE, selon la revendication 1, **caractérisé en ce que** les moyens de réparation de la canalisation comprennent :
- deux disques rotatifs (28) agencés parallèlement aux brides d'extrémité (3) et qui sont associés à une couronne (31) dont l'actionnement entraîne la rotation des disques rotatifs autour de la canalisation (5),
- un moteur qui se met en prise avec la couronne (31) pour produire la rotation des disques rotatifs (28) autour de la canalisation (5),
- un galet (24) équipé d'un axe tubulaire qui communique avec des trous (30) pourvus sur sa surface, qui peut tourner sur son axe tubulaire et est agencé sur les disques rotatifs (28) pour placer le galet (24) sur la surface de la canalisation (5) en appuyant dessus,
- au moins une liaison de l'axe tubulaire du galet (24) avec un dépôt d'un produit chimique de réparation permettant, en faisant tourner le galet (24) sur la surface de la canalisation (5), d'appliquer le produit chimique de réparation sur ladite surface de la canalisation (5) par ses trous (30), recouvrant et réparant ladite surface lorsque ledit produit chimique de réparation se solidifie.

4. APPAREIL POUR LA RÉPARATION STRUCTURELLE DE CANALISATIONS IMMERGÉES DANS UN FLUIDE, selon la revendication 3, **caractérisé en ce que** les moyens de réparation de la canalisation comprennent :
- un caisson étanche (40) agencé longitudinalement dans une des portions (2) de l'ossature (1), qui comprend à son tour :
• une trappe (41) qui communique avec la chambre étanche,
• des guides télescopiques (42) dans lesquels elle est agencée,
• une bobine (44) d'une feuille de réparation de canalisation, comprenant deux pivots d'extrémité (48), qui est agencée avec une section d'extrémité de la feuille déroulée et guidée
• des galets de guidage (46) qui maintiennent la section déroulée de la feuille en position verticale,
• un piston (43) pour déplacer lesdits guides télescopiques (42) jusqu'à une position dans laquelle la bobine (44) est positionnée et fixée
- un bras (47) pourvu dans chacun des disques rotatifs (28) et qui est pourvu d'un retrait (49) permettant de placer et de fixer les pivots (48) du galet (24) ;
le piston (43), les guides télescopiques (42) et les bras (47) étant configurés d'une manière telle que lorsque le piston (43) est actionné, il déplace les guides télescopiques (42) ouvrant la trappe (41) et les pivots (48) de la bobine (44) étant logés dans les retraits (49) des bras (47), l'extrémité de la feuille étant déroulée sur la surface de la canalisation (5) ; et lesdits bras (47) étant placés en correspondance avec le galet (24) de sorte que lorsque l'extrémité de la feuille de la bobine (44) est positionnée sur la surface de la canalisation (5), au moment où s'effectue la rotation des disques rotatifs (28), le galet (24) se place sur le bord de la feuille, l'appuyant contre la surface de la canalisation (5) ; appliquant le produit chimique de réparation sur la feuille de la bobine (44) pour produire son adhérence sur la canalisation et sa solidification ultérieure, réparant ladite canalisation.

5. APPAREIL POUR LA RÉPARATION STRUCTURELLE DE CANALISATIONS IMMERGÉES DANS UN FLUIDE, selon la revendication 3, **caractérisé en ce que** les moyens de réparation comprennent :
- au moins une bobine (44) pourvue d'un axe (2) et d'un élément de traction (72) destiné à tirer son axe dans la direction de déroulement de la bobine (44) dans sa section initiale de déroulement,
- des retraits (61) pourvus sur les disques rotatifs (28), pour l'emplacement des extrémités de l'axe (2) de la bobine (44),
- un chargeur étanche (63) de bobines (44), agencé longitudinalement dans une des portions de l'ossature (1) qui comporte des moyens permettant une fermeture étanche d'introduction des bobines (44) dans la chambre étanche (6) ; et le chargeur étanche comportant un élément de retenue et de blocage de la bobine (44) dans sa position enroulée, et des moyens permettant l'expulsion de la bobine dans la chambre étanche (6), laquelle expulsion positionne l'axe (62) de la bobine dans les retraits (61) des disques rotatifs (28) et débloque la position enroulée de la bobine (44) qui, sous l'action de l'élément de traction (72), est déroulée dans sa section finale d'enroulement, jusqu'à ce qu'au moins l'extrémité de la feuille (71) de la bobine soit positionnée sur la surface de la canalisation (5),
- les retraits (61) des disques rotatifs (28) étant placés en correspondance avec le galet (24) de sorte que lorsque l'extrémité de la feuille (71) de la bobine (44) est positionnée sur la surface de la canalisation (5), ils établissent que le galet est placé au-dessus de l'extrémité de la feuille (71) et l'appuient contre la surface de la canalisation (5) ; appliquant le produit chimique de réparation sur la feuille (71) de la bobine (44) pour produire son adhérence sur la canalisation et sa solidification ultérieure, réparant ladite canalisation.

6. APPAREIL POUR LA RÉPARATION STRUCTURELLE DE CANALISATIONS IMMERGÉES DANS UN FLUIDE, selon la revendication 3, **caractérisé en ce que** les moyens pour vidanger l'eau de la chambre étanche sont sélectionnés parmi des moyens d'injection d'air dans la chambre étanche (6), qui produisent la vidange de l'eau à travers des clapets antiretour pourvus dans les portions (2) de l'ossature (1), et des moyens d'aspiration de l'eau contenue dans la chambre étanche (6) ; les moyens d'injection d'air comprenant un compresseur d'air qui est appliqué sélectivement sur des buses agencées dans l'ossature (1), et sur un conduit qui est relié à l'axe tubulaire du galet (24) ; lesdits injecteurs étant sélectionnés parmi des injecteurs munis de buses fixes et des injecteurs munis de buses réglables dans différentes directions au travers de mécanismes à pistons collés sur l'ossature, pour déplacer les buses.

7. APPAREIL POUR LA RÉPARATION STRUCTURELLE DE CANALISATIONS IMMERGÉES DANS UN FLUIDE, selon la revendication 2, **caractérisé en ce que** les premiers éléments de glissement sur la canalisation (5) comprennent des premiers galets (18) assistés d'un ressort (19) avec précharge pour appuyer contre la canalisation (5) et lorsqu'ils effectuent leur glissement sur ladite canalisation (5), ils absorbent les irrégularités de la surface éventuellement présentes sur ladite canalisation (5).

8. APPAREIL POUR LA RÉPARATION STRUCTURELLE DE CANALISATIONS IMMERGÉES DANS UN FLUIDE, selon la revendication 2, **caractérisé en ce que** les segments de collier (9) comprennent des moyens pour freiner l'ossature (1) sur la canalisation (5) afin d'éviter son dérapage pendant la réparation.

9. APPAREIL POUR LA RÉPARATION STRUCTURELLE DE CANALISATIONS IMMERGÉES DANS UN FLUIDE, selon la revendication 8, **caractérisé en ce que** les moyens de freinage comprennent des coins (12) agencés dans des guides inclinés (13) pourvus dans des supports (14) fixés à l'intérieur des segments de collier (9), pour guider le mouvement simultané des coins (12) axialement et radialement par rapport à la canalisation (5) ; les supports (14) étant pourvus de pivots de guidage (15) dans lesquels un segment annulaire (16) est agencé pour chaque segment de collier (9), qui sont agencés perpendiculairement à la partie intérieure du segment de collier (9) ; attachés aux coins (12) et à un piston gonflable (17) et assistés de ressorts (19) ; pour entraîner, lors du gonflage du piston gonflable (17), le déplacement transversal des segments d'anneau (16) sur les segments de collier (9) contrant l'action des ressorts (19) ; et entraîner simultanément le déplacement radial des coins (12) vers l'extérieur de la canalisation (5) en la séparant, et lors du dégonflage du piston gonflable (17) produire le mouvement opposé appuyant les coins (17) sur la surface de la canalisation (5).

10. APPAREIL POUR LA RÉPARATION STRUCTURELLE DE CANALISATIONS IMMERGÉES DANS UN FLUIDE, selon la revendication 6, **caractérisé en ce qu'**il comprend des moyens pour nettoyer la canalisation (5) qui comportent sélectivement les moyens d'injection d'air, et un dépôt d'un produit abrasif conjointement avec un compresseur relié aux buses pourvues dans les portions (2) de l'ossature (1) et une combinaison des deux pour projeter sélectivement le produit abrasif de nettoyage, de l'air et une combinaison des deux sur la canalisation (5) ; les moyens de nettoyage comportant également des moyens permettant d'aspirer les déchets produits par le nettoyage au travers de buses ;

11. APPAREIL POUR LA RÉPARATION STRUCTURELLE DE CANALISATIONS IMMERGÉES DANS UN FLUIDE, selon la revendication 3, **caractérisé en ce que** l'au moins une liaison de l'axe tubulaire du galet (24) avec un dépôt d'un produit chimique de réparation comporte :
- un premier et un second raccord femelle (32) et (33) contigus et assistés d'un ressort (34) qui sont fixés dans un des disques rotatifs (28), et qui sont reliés à l'axe tubulaire du galet (24) par un conduit,
- un premier et un second raccord mâle (35) et (36), agencés chacun dans une voie semi-circulaire à position fixe (37), pourvus autour de la canalisation (5) et reliés, chacun dudit premier et dudit second raccord mâle (35) et (36), avec un dépôt d'un produit chimique de réparation ; les raccords mâles (35) et (36) étant assistés d'une sangle qui les maintient à la fin initiale de la voie (37),
- deux cames (38) pourvues en correspondance avec le début et la fin de chaque voie (37) et placées dans la trajectoire des raccords femelles (32) et (33) pour produire le déplacement desdits raccords femelles (32) et (33) contrant l'action du ressort (34) ;
- où les raccords femelles (32) et (33), les raccords mâles (35) et (36) et les cames (38) sont configurés de sorte que lorsque le premier raccord femelle (32) est couplé au premier raccord mâle (35), la rotation des disques rotatifs (28) produit le déplacement angulaire des raccords femelles (32) et (33) le traînement du premier raccord femelle (32) jusqu'au premier raccord mâle (35) contrant l'action de la sangle, de sorte que lorsqu'elle atteint la fin de la voie (37), la came initiale (38) de l'autre voie (37) élève le second raccord femelle (33) et entraîne son couplage dans le second raccord mâle (36), agencé au début de la voie (37) et le premier raccord femelle (32) vient alors au contact de la came (38) pourvue à la fin de la voie (37), produisant l'élévation du premier raccord femelle (32) contrant l'action de son ressort (34) et le déconnectant du premier raccord mâle (35), renvoyant le premier raccord mâle (35) dans sa position initiale sous l'action de la sangle.

12. APPAREIL POUR LA RÉPARATION STRUCTURELLE DE CANALISATIONS IMMERGÉES DANS UN FLUIDE, selon la revendication 3, **caractérisé en ce que** le galet (24) est agencé sur les disques rotatifs au moyen d'un mécanisme de levage/abaissement du galet comprenant un axe rotatif (25) assisté d'un ressort (26), fixé aux disques rotatifs (28), et dont sont solidaires deux bras d'extrémité (27) dans lesquels est fixé l'axe du galet (24), et l'axe de rotation (25) est également solidaire d'un levier (51) qui peut être actionné par une came (52) à position mobile sur les disques rotatifs (28) au moyen d'un piston (53), pour positionner la came (52) à position mobile dans la trajectoire du levier (51), produisant le déplacement angulaire de l'axe de rotation (25) contrant l'action dudit ressort (26), et produisant l'élévation du galet (24) ; qui au travers d'une goupille de verrouillage (54) dans l'axe de rotation (25) est maintenu dans la position élevée jusqu'à ce qu'un coin (55) agencé dans les disques rotatifs agisse sur la goupille de verrouillage (54) entraînant l'abaissement du galet (24) sous l'action du ressort (26) jusqu'à ce qu'il vienne au contact de la canalisation.

13. APPAREIL POUR LA RÉPARATION STRUCTURELLE DE CANALISATIONS IMMERGÉES DANS UN FLUIDE, selon la revendication 5, **caractérisé en ce que** les moyens d'expulsion de la bobine comprennent un bouton à commande manuelle (66) attaché à un plongeur (68), dont l'actionnement entraîne le déplacement du plongeur (68) qui pousse la bobine (44), et cela pousse un couvercle articulé (70) qui constitue les moyens pour la fermeture étanche d'introduction de la bobine, libérant simultanément l'élément de retenue et de blocage de l'axe (62) de la bobine (44), déroulant sa section finale d'enroulement de la feuille (71).

14. APPAREIL POUR LA RÉPARATION STRUCTURELLE DE CANALISATIONS IMMERGÉES DANS UN FLUIDE, selon la revendication 5, **caractérisé en ce que** les moyens d'expulsion de la bobine comprennent un électroaimant attaché à un plongeur (68) qui est actionné par un module de commande qui, au moyen d'un capteur, détecte le moment où les retraits (61) des disques rotatifs (28) sont placés à la verticale de la bobine à expulser, dont l'actionnement entraîne le déplacement du plongeur qui pousse la bobine et cela pousse un couvercle articulé (70) qui constitue les moyens pour la fermeture étanche d'introduction de la bobine, libérant l'élément de traction (72) de l'axe (62) de la bobine (44), déroulant sa section initiale de déroulement de la feuille (71).

15. APPAREIL POUR LA RÉPARATION STRUCTURELLE DE CANALISATIONS IMMERGÉES DANS UN FLUIDE, selon les revendications 3 ou 6, **caractérisé en ce qu'**il comprend des moyens pour commander la température de la chambre étanche et du segment de canalisation pourvus dans les portions (2) de l'ossature, sélectionnés entre une commande d'augmentation de la température et une commande d'abaissement de la température qui s'effectue au moyen d'un élément sélectionné parmi des résistances de chauffage, et un élément d'application de l'air produit par les moyens de vidange, pour faciliter la réaction chimique et la solidification du produit chimique de réparation.

16. APPAREIL POUR LA RÉPARATION STRUCTURELLE DE CANALISATIONS IMMERGÉES DANS UN FLUIDE selon la revendication 3, **caractérisé en ce que** le galet (24) est fixé à la couronne (31) et au disque rotatif (28) au moyen d'un support à hauteur réglable (74) assisté d'un ressort (75) qui maintient le galet (24) appuyé contre la surface de la canalisation (5) en s'ajustant aux différentes hauteurs de roulement de la feuille (71) de la bobine (44) sous l'action du ressort (75).

17. APPAREIL POUR LA RÉPARATION STRUCTURELLE DE CANALISATIONS IMMERGÉES DANS UN FLUIDE, selon la revendication 2, **caractérisé en ce que** les portions (2) comprennent des pattes de centrage (58) assistées d'un ressort de sorte que lors du rapprochement des portions (2) sur la canalisation (5), les pattes de centrage (58) s'appuient sur la canalisation et procèdent au centrage desdites portions (2) sur ladite canalisation (5) dans le rapprochement des portions (2).

18. APPAREIL POUR LA RÉPARATION STRUCTURELLE DE CANALISATIONS IMMERGÉES DANS UN FLUIDE, selon la revendication 1, **caractérisé en ce qu'**il comprend des capteurs pour détecter l'état de la canalisation (5), qui sont sélectionnés parmi des palpeurs (20), des capteurs à ultrasons et des caméras pour capturer des images, comprenant en outre un élément de tir de billes de produit chimique de réparation pour remplir des cavités détectées dans la surface de la canalisation, actionné par de l'air comprimé.

19. APPAREIL POUR LA RÉPARATION STRUCTURELLE DE CANALISATIONS IMMERGÉES DANS UN FLUIDE, selon la revendication 2, **caractérisé en ce qu'**il comprend des moyens pour fixer un câble de levage des portions (2) de l'ossature (1) pour agencer lesdites portions (2) autour d'une canalisation verticale hors de l'eau et procéder à son glissement sur la canalisation (5) par actionnement du câble de levage.

20. APPAREIL POUR LA RÉPARATION STRUCTURELLE DE CANALISATIONS IMMERGÉES DANS UN FLUIDE, selon la revendication 2, **caractérisé en ce qu'**il comprend un cylindre extensible (78) dont les extrémités sont attachées de façon articulée au joint articulé (10) des segments de collier (9) et à une extrémité d'une des portions (2) de l'ossature (1), pour procéder au rapprochement ou à la séparation desdits segments de collier; l'un desdits segments de collier étant équipé à ses extrémités d'au moins une barre (79) qui ressort tangentiellement desdites extrémités et qui est agencée dans un capuchon de glissement (80) pourvu aux extrémités de l'autre segment de collier pour procéder au rapprochement ou à la séparation guidés des segments de collier; et les extrémités des portions (2) de l'ossature (1) comprenant des seconds moyens pour guider l'ossature sur la canalisation (5), qui comprennent à leur tour au moins deux secteurs circulaires (81) agencés sur un rail de guidage (82), assistés d'un cylindre télescopique (83), et équipés de seconds éléments de glissement (85) sur la canalisation (5), les secteurs circulaires (81) étant agencés entre ladite extrémité de chacune des portions (2) de l'ossature (1) et les segments de collier, et séparés desdits segments de collier au moins d'une distance correspondant à la largeur d'un obstacle (77) pourvu dans la canalisation (5) ; les cylindres extensibles (78) et les cylindres télescopiques (83) étant configurés de sorte que lorsque s'effectue le glissement guidé de l'ossature (1) sur la canalisation (5) à travers les premiers éléments de glissement (18) des segments de collier, lorsque lesdits segments de collier atteignent un obstacle de la canalisation (5), les seconds éléments de glissement (85) s'appuient sur la canalisation et les segments de collier (9) sont alors séparés, pour guider l'ossature sur la canalisation à travers les seconds éléments de glissement (85) pendant la section de l'obstacle, et une fois vaincus par les segments de collier, les premiers éléments de glissement (18) s'appuient sur la canalisation et les seconds éléments de glissement (85) se séparent alors de la canalisation, pour continuer de guider l'ossature (1) sur la canalisation à travers lesdits premiers éléments de glissement (18).

21. APPAREIL POUR LA RÉPARATION STRUCTURELLE DE CANALISATIONS IMMERGÉES DANS UN FLUIDE, selon la revendication 2, **caractérisé en ce que** les moyens d'attache entre les segments de collier sont constitués d'un joint mécanique comprenant un profil mobile (86) pourvu d'une ouverture (87) et assisté d'un vérin pneumatique (88), agencé dans les extrémités d'un des segments de collier, et les extrémités de l'autre segment de collier, comprenant une portion laminaire (89), de sorte que lorsque les extrémités des segments de collier sont rapprochées et que le vérin pneumatique (88) agit, la portion laminaire (89) est placée dans l'ouverture (87) du profil mobile (86), réalisant la fermeture.

22. PROCÉDÉ POUR LA RÉPARATION STRUCTURELLE DE CANALISATIONS IMMERGÉES DANS UN FLUIDE, **caractérisé en ce qu'**il comprend :
- le montage autour d'une canalisation (5) d'un appareil selon la revendication 1 comprenant une ossature (1) à configuration tubulaire pourvue de deux portions (2) à fermeture étanche, formant une chambre étanche (6) entre l'ossature (1) et la canalisation (5),
- la vidange de l'eau de l'intérieur de la chambre étanche (6),
- la réparation de la canalisation par des moyens de réparation de la canalisation pourvus dans l'ossature,
- le retrait de l'ossature (1) pour réutilisation.

23. PROCÉDÉ POUR LA RÉPARATION STRUCTURELLE DE CANALISATIONS IMMERGÉES DANS UN FLUIDE, selon la revendication 22, **caractérisé en ce que** la vidange de l'eau de l'intérieur de la chambre étanche (6) est effectuée par une étape sélectionnée parmi une étape d'injection d'air qui déplace l'eau à l'extérieur de la chambre au travers de clapets antiretour et une étape d'aspiration d'eau de l'intérieur de la chambre étanche (6).

24. PROCÉDÉ POUR LA RÉPARATION STRUCTURELLE DE CANALISATIONS IMMERGÉES DANS UN FLUIDE, selon la revendication 22, **caractérisé en ce que** l'étape de montage d'une ossature (1) à configuration tubulaire pourvue de deux portions (2) avec fermeture étanche autour d'une canalisation (5), formant une chambre étanche (6) entre l'ossature (1) et la canalisation (5) comprend :
- l'actionnement d'un élément extensible (7) qui est fixé aux portions (2) formant l'ossature (1) pour les séparer et les placer autour d'une canalisation verticale (5) dans la zone qui se trouve hors de l'eau,
- la jonction de deux segments de collier complémentaires (9) autour de la canalisation (5), formant une partie de premiers moyens pour guider l'ossature sur la canalisation (5), où les segments de collier (9) s'articulent à au moins une extrémité des portions (2) pour placer des premiers éléments de glissement pourvus dans les segments de collier (9) en appuyant sur la surface de la canalisation,
- le glissement, à travers un dispositif de levage, de l'ossature (1) sur la canalisation (5),
- la détection de l'état de la canalisation pendant le glissement, au moyen de capteurs pourvus dans l'appareil,
- l'arrêt du glissement dans une zone où un dommage est détecté sur la surface de la canalisation (5),
- le couplage des portions (2) sur la surface de la canalisation (5) dans la zone à réparer, formant une chambre étanche (6),
- le blocage de la position de l'ossature (1) par l'actionnement de moyens de freinage pourvus dans l'appareil.

25. PROCÉDÉ POUR LA RÉPARATION STRUCTURELLE DE CANALISATIONS IMMERGÉES DANS UN FLUIDE, selon la revendication 24, **caractérisé en ce que** lors du glissement guidé de l'ossature (1) sur la canalisation (5) effectué par les segments de collier des premiers moyens de guidage, lorsque lesdits segments de collier atteignent un obstacle dans la canalisation (5), il comprend une étape lors de laquelle des seconds éléments de glissement (85) de seconds moyens de guidage de l'ossature s'appuient sur la canalisation (5) et les segments de collier sont alors séparés pendant une section d'un obstacle pourvu sur la canalisation, et une fois ledit obstacle éliminé par les segments de collier, les premiers éléments de glissement (18) des segments de collier des premiers moyens de guidage s'appuient sur la canalisation, et les seconds éléments de glissement (85) de la canalisation sont alors séparés des seconds moyens de guidage, pour continuer de guider l'ossature (1) sur la canalisation à travers lesdits premiers éléments de glissement (18) des premiers moyens de guidage ; le processus étant répété pour l'autre extrémité des portions (2) de l'ossature (1).

26. PROCÉDÉ POUR LA RÉPARATION STRUCTURELLE DE CANALISATIONS IMMERGÉES DANS UN FLUIDE, selon la revendication 22, **caractérisé en ce que** la réparation de la canalisation (5) comprend l'application d'un produit chimique de réparation sur un axe tubulaire d'un galet (24), agencé dans la chambre étanche (6) appuyant sur la surface de la canalisation (5), et l'application du produit chimique de réparation sur la surface de la canalisation (5) au travers de trous (30) pourvus sur la surface du galet (24) lorsqu'il effectue sa rotation autour de son axe et de la canalisation (5) pour produire le revêtement de la surface de la canalisation et sa solidification ultérieure.

27. PROCÉDÉ POUR LA RÉPARATION STRUCTURELLE DE CANALISATIONS IMMERGÉES DANS UN FLUIDE, selon les revendications 22 ou 24, **caractérisé en ce que** la réparation de la canalisation comprend les étapes suivantes :
- introduction d'une bobine (44) de manière serrée dans la chambre étanche (6), une feuille pour réparer des canalisations étant enroulée sur ladite bobine (44), dans une position parallèle à la canalisation (5), avec une section de l'extrémité de la feuille déroulée pour la placer sur la canalisation (5),
- actionnement d'un galet (24) agencé dans la chambre étanche (6) pour exercer une pression sur la surface de la canalisation (5), réalisation de sa rotation autour de son axe et de la canalisation (5) pour retenir l'extrémité de la feuille de la bobine (44) entre le galet (24) et la canalisation (5) et déroulement de la feuille de la bobine (44) autour de la canalisation (5) en déplaçant le galet (24) sur ladite canalisation (5), et application sélective d'un produit chimique de réparation sur l'axe tubulaire du galet (24), appui sur la surface de la feuille de la bobine (44), et application du produit chimique de réparation sur la feuille à travers les trous (30) pourvus dans la surface du galet (24) lorsqu'il effectue sa rotation autour de son axe et de la canalisation (5) pour produire le revêtement de la feuille avec un produit chimique de réparation,
- répétition du processus à partir de l'introduction dans la chambre étanche (6) d'une nouvelle bobine (44), une pluralité de fois nécessaires pour réparer la canalisation (5).

28. PROCÉDÉ POUR LA RÉPARATION STRUCTURELLE DE CANALISATIONS IMMERGÉES DANS UN FLUIDE, selon les revendications 26 ou 27, **caractérisé en ce qu'**il comprend une étape de nettoyage de la canalisation (5), avant l'étape de réparation, à l'aide de moyens de nettoyage pourvus dans l'appareil, qui procèdent à une étape sélectionnée parmi une étape d'application d'un produit de nettoyage abrasif sur la surface de la canalisation (5) et une étape d'injection d'air; comprenant ensuite une étape d'aspiration des déchets résultant du nettoyage effectué ; et après que l'étape de réparation a été effectuée, une étape de commande de la température de la chambre étanche et du segment de canalisation avec une commande, sélectionnée entre une commande d'augmentation de la température et une commande d'abaissement de la température qui est effectuée par un élément sélectionné parmi des résistances de chauffage, et un élément d'application d'air, pour faciliter la réaction chimique du produit chimique de réparation, et accélérer sa solidification.
